# EUROPEAN PATENT APPLICATION

(11) **EP 2 750 146 A1**
(43) Date of publication of application: **02.07.2014**
(21) Application number: 12827413.1
(22) Date of filing: 24.08.2012
(51) Int. Cl.: H01F 6/00, H01F 6/06, H02K 55/02

(54) **SUPERCONDUCTING COIL AND SUPERCONDUCTING DEVICE**

(30) Priority: 26.08.2011 JP 2011185060; 11.05.2012 JP 2012109662; 13.08.2012 JP 2012179323; 23.08.2012 JP 2012184355
(71) Applicant: Sumitomo Electric Industries, Ltd., Osaka-shi, Osaka 541-0041 (JP)
(72) Inventor: NAKAMURA, Yuuichi, Osaka-shi, Osaka 554-0024 (JP); ARAKAWA, Satoshi, Osaka-shi, Osaka 554-0024 (JP); SHINZATO, Tsuyoshi, Osaka-shi, Osaka 554-0024 (JP); OYAMA, Hitoshi, Osaka-shi, Osaka 554-0024 (JP)
(74) Representative: Desormiere, Pierre-Louis
(86) International application number: PCT/JP2012/071426
(87) International publication number: WO 2013/031679

(57) **Abstract**

A superconducting coil body and a superconducting device are provided so as to achieve reduction of loss. A superconducting coil body (10) includes: an inner circumferential coil body (12a, 12b) serving as a coil main body portion in which a superconducting wire (15) is wound; and a first magnetic body (13) serving as a magnetic circuit member. The magnetic circuit member is formed of a magnetic body, and is disposed to face the upper surface of the inner circumferential coil body (12a), the upper surface being positioned at an end surface side thereof crossing a main surface of the superconducting wire (15) in the inner circumferential coil body (12a, 12b). The first magnetic body (13) is used to form a magnetic circuit for permitting magnetic flux, which is generated by a current flowing in the coil main body portion, to travel around the current.

## Description

### TECHNICAL FIELD

The present invention relates to a superconducting coil body and a superconducting device, more particularly, a superconducting coil body and a superconducting device each including a magnetic circuit member for a magnetic circuit.

### BACKGROUND ART

Conventionally, a superconducting coil has been known which is formed by winding a superconducting wire (for example, see Japanese Patent Laying-Open No. 2011-091094 (Patent Document 1)). In the superconducting coil, when a magnetic field is generated by flow of current and lines of magnetic flux of the magnetic field pass through a main surface of the superconducting wire, an electric property of the superconducting coil becomes deteriorated, disadvantageously. The following describes this more specifically.

When an AC magnetic field is generated by flow of an AC current in the superconducting coil, so-called "AC loss" takes place, such as hysteresis loss, coupling loss, or eddy current loss. A magnitude of this AC loss is determined by a magnitude of magnetic flux density in the magnetic field. However, the magnitude of the loss (AC loss) differs depending on directions of the lines of magnetic flux relative to the superconducting coil (specifically, the main surface of the superconducting wire). For example, in a region having a relatively large magnetic flux density, a magnetic flux in a direction perpendicular to the main surface of the superconducting wire of the superconducting coil may cause loss ten or more times larger than loss caused by a magnetic flux parallel to the main surface. Here, the term "main surface of the superconducting wire" is intended to indicate a surface having a relatively large surface area among surfaces constituting the side surfaces of the superconducting wire in the case where the superconducting wire is a wire having a tape-like shape.

In Japanese Patent Laying-Open No. 2011-091094 described above, it is proposed that the main surface of the superconducting wire of the superconducting coil is disposed to be inclined relative to the center axis of the winding of the superconducting wire such that the main surface is disposed in a direction of extension of lines of magnetic flux expected to be generated, thereby reducing a ratio of the lines of magnetic flux passing through the main surface of the superconducting wire.

### CITATION LIST

### PATENT DOCUMENT

PTD 1: Japanese Patent Laying-Open No. 2011-091094

### SUMMARY OF INVENTION

### TECHNICAL PROBLEM

However, the ratio of the lines of magnetic flux passing through the main surface of the superconducting wire may not be reduced sufficiently only using the method of adjusting the direction of the main surface of the superconducting wire in the superconducting coil as described above.

Regarding a superconducting coil including a magnetic circuit member as studied by the inventors, Japanese Patent Laying-Open No. 2011-091094 described above does not disclose or suggest an influence of an angle of inclination of the main surface of the superconducting wire relative to the center axis of the winding of the superconducting material. In the superconducting coil including the magnetic circuit member, distribution of the lines of magnetic flux is influenced by the existence of the magnetic circuit member. Hence, it is necessary to additionally examine a preferable range of the above-described angle of inclination to reduce loss, as well as the influence thereof.

The present invention has been made to solve the foregoing problem, and has an object to provide a superconducting coil body and a superconducting device both achieving reduction of loss.

### SOLUTION TO PROBLEM

A superconducting coil body according to the present invention includes: a coil main body portion in which a superconducting wire is wound; and a magnetic circuit member. The magnetic circuit member is formed of a magnetic body and is disposed to face a surface of the coil main body portion, the surface being positioned at an end surface side thereof crossing a main surface of the superconducting wire. The magnetic circuit member is used to form a magnetic circuit for permitting magnetic flux, which is generated by a current flowing in the coil main body portion, to travel around the current.

Further, a superconducting coil body according to the present invention includes: a coil main body portion in which a superconducting wire is wound; and a magnetic circuit member. The magnetic circuit member is formed of a magnetic body and is disposed to face a surface of the coil main body portion, the surface being positioned at an end surface side thereof crossing a main surface of the superconducting wire. The magnetic circuit member includes a facing surface that faces the surface of the coil main body portion, and a side surface continuous to the facing surface and extending in a direction crossing the facing surface. The side surface has a flat surface portion that is positioned at an end portion thereof close to the coil main body portion and that extends in a direction of extension of the main surface of the superconducting wire.

In this case, the coil main body portion and the magnetic circuit member form a portion of the magnetic circuit, and the side surface of the magnetic circuit member has the flat surface portion close to the coil main body portion. Hence, in a region where the surface of the coil main body portion and the facing surface of the magnetic circuit member face each other, a direction of lines of magnetic flux from the magnetic circuit member to the coil main body portion can be efficiently defined to be a direction along the main surface of the superconducting wire of the coil main body portion. In other words, the magnetic circuit member, which is formed of the magnetic body, is disposed at the end surface side crossing the main surface of the superconducting wire of the coil main body portion. Accordingly, the coil main body portion and the magnetic circuit member are disposed such that magnetic flux can travel around the center of the current flowing in the coil main body portion. As a result, the direction of magnetic flux generated by the current flowing in the coil main body portion can be guided to the direction along the main surface of the superconducting wire as described above. This can effectively reduce a ratio of the lines of magnetic flux extending to pass through the main surface of the superconducting wire in the coil main body portion. This can suppress occurrence of loss resulting from the lines of magnetic flux passing through the main surface of the superconducting wire in the superconducting coil.

A superconducting device according to the present invention includes the superconducting coil body described above. In this case, a highly efficient superconducting device can be implemented in which loss is suppressed in the superconducting coil body.

### ADVANTAGEOUS EFFECTS OF INVENTION

According to the present invention, loss can be effectively suppressed from taking place in the superconducting coil body.

### BRIEF DESCRIPTION OF DRAWINGS

Fig. 1 is a schematic cross sectional view showing a superconducting motor according to a first embodiment of the present invention.
Fig. 2 is a schematic cross sectional view showing a cooling container in which a superconducting coil body of the superconducting motor shown in Fig. 1 is contained.
Fig. 3 is a partial schematic cross sectional view of the superconducting coil body shown in Fig. 2.
Fig. 4 is a partial enlarged schematic cross sectional view of the superconducting coil body shown in Fig. 3.
Fig. 5 is a partial schematic cross sectional view of a superconducting coil body of a superconducting motor according to a second embodiment of the present invention.
Fig. 6 is a partial schematic cross sectional view of a superconducting coil body of a superconducting motor according to a third embodiment of the present invention.
Fig. 7 is a partial schematic cross sectional view of a superconducting coil body of a superconducting motor according to a fourth embodiment of the present invention.
Fig. 8 is a schematic cross sectional view showing a superconducting motor according to a fifth embodiment of the present invention.
Fig. 9 is a schematic cross sectional view showing a cooling container in which a superconducting coil body of the superconducting motor shown in Fig. 8 is contained.
Fig. 10 is a partial schematic cross sectional view of the superconducting coil body shown in Fig. 9.
Fig. 11 is a partial enlarged schematic cross sectional view of the superconducting coil body shown in Fig. 10.
Fig. 12 is a partial enlarged schematic cross sectional view showing a modification of the superconducting coil body shown in Fig. 11.
Fig. 13 is a partial schematic cross sectional view of a superconducting coil body of a superconducting motor according to a sixth embodiment of the present invention.
Fig. 14 is a partial schematic cross sectional view of a superconducting coil body of a superconducting motor according to a seventh embodiment of the present invention.
Fig. 15 is a partial schematic cross sectional view of a superconducting coil body of a superconducting motor according to an eighth embodiment of the present invention.
Fig. 16 is a schematic cross sectional view showing a cooling container in which a superconducting coil body of a superconducting motor according to a ninth embodiment of the present invention is contained.
Fig. 17 is a partial schematic cross sectional view of the superconducting coil body shown in Fig. 16.
Fig. 18 is a partial schematic cross sectional view of a superconducting coil body of a superconducting motor according to a tenth embodiment of the present invention.
Fig. 19 is a partial schematic cross sectional view of a superconducting coil body of a superconducting motor according to an eleventh embodiment of the present invention.
Fig. 20 is a partial schematic cross sectional view of a superconducting coil body of a superconducting motor according to a twelfth embodiment of the present invention.
Fig. 21 is a schematic cross sectional view showing a cooling container in which a superconducting coil body of a superconducting motor according to a thirteenth embodiment of the present invention is contained.
Fig. 22 is a partial schematic cross sectional view of the superconducting coil body shown in Fig. 21.
Fig. 23 is a partial schematic cross sectional view of a superconducting coil body of a superconducting motor according to a fourteenth embodiment of the present invention.
Fig. 24 is a partial schematic cross sectional view of a superconducting coil body of a superconducting motor according to a fifteenth embodiment of the present invention.
Fig. 25 is a partial schematic cross sectional view of a superconducting coil body of a superconducting motor according to a sixteenth embodiment of the present invention.
Fig. 26 is a partial schematic cross sectional view of a superconducting coil body of a superconducting motor according to a seventeenth embodiment of the present invention.
Fig. 27 is a schematic plan view of a superconducting coil body of a superconducting motor according to an eighteenth embodiment of the present invention.
Fig. 28 is a partial schematic cross sectional view of the superconducting coil body shown in Fig. 27.
Fig. 29 is a schematic perspective view of a superconducting coil body of a superconducting motor according to a nineteenth embodiment of the present invention.
Fig. 30 is a schematic exploded view of the superconducting coil body shown in Fig. 29.
Fig. 31 is a partial enlarged schematic view of the superconducting coil body shown in Fig. 29.
Fig. 32 is a partial enlarged schematic view of the superconducting coil body shown in Fig. 29.
Fig. 33 is a schematic plan view of a superconducting coil body of a superconducting motor according to a twentieth embodiment of the present invention.
Fig. 34 is a schematic cross sectional view showing a cooling container in which a superconducting coil body of a superconducting motor according to a twenty-first embodiment of the present invention is contained.
Fig. 35 is a partial schematic cross sectional view of the superconducting coil body shown in Fig. 34.
Fig. 36 is a partial schematic cross sectional view of a superconducting coil body of a superconducting motor according to a twenty-second embodiment of the present invention.
Fig. 37 is a characteristic diagram for illustrating example 3 of the present invention.

### DESCRIPTION OF EMBODIMENTS

The following describes embodiments of the present invention with reference to figures. It should be noted that in the below-mentioned figures, the same or corresponding portions are given the same reference characters and are not described repeatedly.

### (First Embodiment)

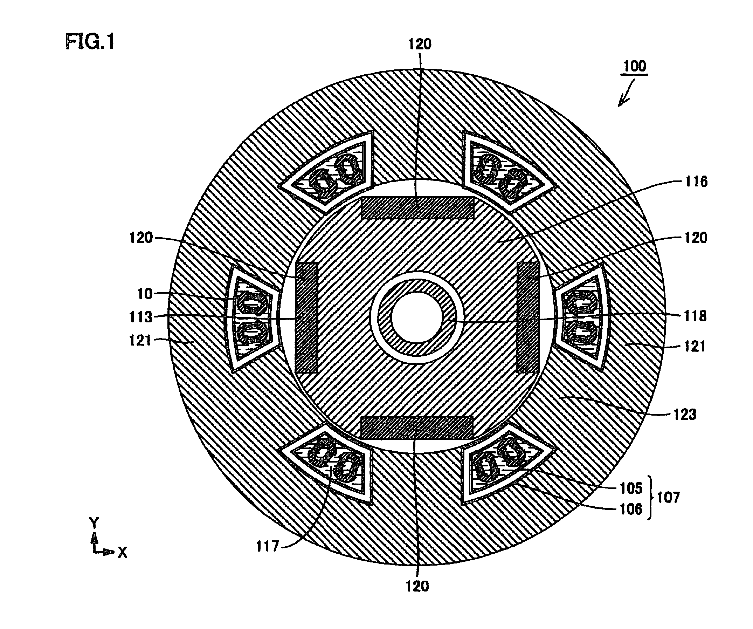

Referring to Fig. 1 to Fig. 4, the following describes a superconducting motor according to the present invention.

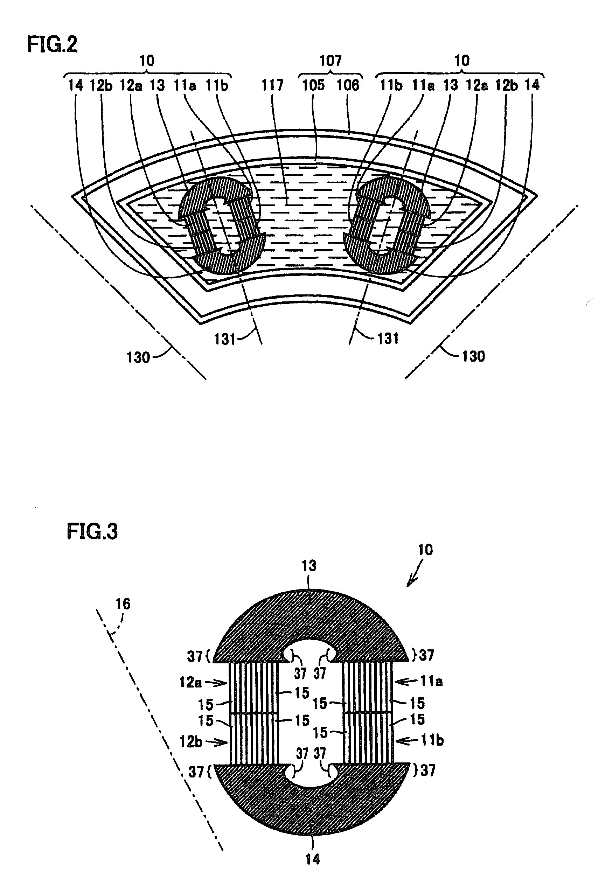

Referring to Fig. 1 and Fig. 2, a superconducting motor 100 according to the present invention includes a rotor and a stator disposed around the rotor. The rotor includes: a rotation shaft 118 extending in a long axis direction perpendicular to the plane of sheet of Fig. 1; a rotor shaft 116 connected to and disposed around rotation shaft 118; and four permanent magnets 120 disposed at an equal interval in the outer surface of rotor shaft 116. Rotor shaft 116 has an outer surface having an arc-like cross sectional shape. Each of permanent magnets 120 disposed at the equal interval in the circumferential direction of the outer surface of rotor shaft 116 has a quadrangular cross sectional shape. Permanent magnet 120 is disposed to extend in a direction of extension of rotation shaft 118, i.e., in the direction perpendicular to the plane of sheet of Fig. 1. Examples of permanent magnet 120 include: a neodymium-based magnet, a samarium-based magnet, a ferrite-based magnet, and the like.

Around the rotor, the stator is disposed as the stator of superconducting motor 100 as shown in Fig. 1. The stator includes: a stator yoke 121; stator cores 123 formed to project from the inner circumferential side of stator yoke 121 toward the rotor; superconducting coil bodies 10 disposed to surround the outer circumferences of stator cores 123; and cooling containers 107 having the superconducting coil bodies retained therein.

Stator yoke 121 is disposed to surround the outer circumference of rotor shaft 116. The cross sectional shape of the inner surface of stator yoke 121 (the cross sectional shape along a plane perpendicular to the direction of extension of rotation shaft 118) is an arc-like shape. Superconducting coil bodies 10 are disposed along the arc-like inner surface of stator yoke 121. Each of cooling containers 107 has an opening at a region positioned at the central portion of each superconducting coil body 10, so as to permit insertion of a portion of stator core 123 therein. In other words, superconducting coil bodies 10 are disposed to surround the outer circumferences of stator cores 123.

Cooling container 107 includes: a cooling container inner tub 105 having coolant 117 and superconducting coil bodies 10 retained therein; and a cooling container outer tub 106 disposed to surround the outer circumference of cooling container inner tub 105. A space is provided between cooling container outer tub 106 and cooling container inner tub 105. This space is substantially a vacuum. In other words, cooling container 107 is a heat insulation container.

As shown in Fig. 1 to Fig. 3, each of superconducting coil bodies 10 includes: inner circumferential coil bodies 12a, 12b surrounding the outer circumference of stator core 123; outer circumferential coil bodies 11a, 11b disposed to surround the outer circumferential sides of inner circumferential coil bodies 12a, 12b; a first magnetic body 13 disposed to connect the upper end surface of inner circumferential coil body 12a and the upper end surface of outer circumferential coil body 11a to each other; and a second magnetic body 14 disposed to connect the lower end surface of inner circumferential coil body 12b and the lower end surface of outer circumferential coil body 11b to each other. Inner circumferential coil bodies 12a, 12b and outer circumferential coil bodies 11a, 11b are formed to annularly surround a center axis 16 shown in Fig. 3. Superconducting coil body 10 is formed such that the respective surfaces of inner circumferential coil bodies 12a, 12b and outer circumferential coil bodies 11a, 11b are inclined relative to center axis 16 at a predetermined angle (for example, 20°). When viewed from a different point of view, longitudinal axis 131 of superconducting coil body 10 in the cross section shown in Fig. 2 is disposed to be inclined relative to center axis 130 of the stator core at a predetermined angle (for example, 20°). Inner circumferential coil bodies 12a, 12b and outer circumferential coil bodies 11a, 11b are formed by winding a superconducting wire 15 having a tape-like shape. Inner circumferential coil bodies 12a, 12b are disposed on each other such that the end surface (end surface continuous to the main surface) of superconducting wire 15 of inner circumferential coil body 12a and the end surface of superconducting wire 15 of inner circumferential coil body 12b face each other. Likewise, outer circumferential coil bodies 11a, 11b are also disposed on each other such that the end surface (end surface continuous to the main surface) of superconducting wire 15 of inner circumferential coil body 11a and the end surface of superconducting wire 15 of inner circumferential coil body 11b face each other. It should be noted that the structure shown here is a structure in which the two coils, i.e., inner circumferential coil bodies 12a, 12b are disposed on each other, but only one inner circumferential coil body may be disposed or three or more inner circumferential coil bodies may be disposed on one another. Likewise, regarding outer circumferential coil bodies 11a, 11b, only one inner circumferential coil body may be disposed or three or more outer circumferential coil bodies may be disposed on one another.

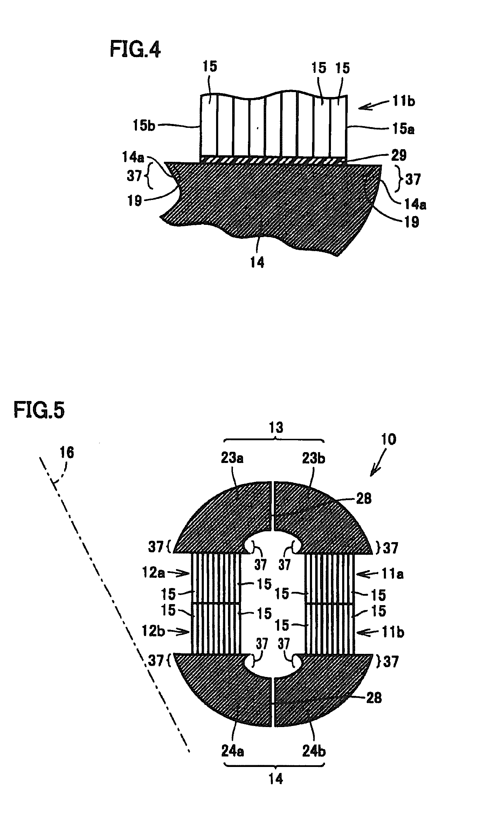

As shown in Fig. 2 and Fig. 3, each of first magnetic body 13 and second magnetic body 14 has a bent cross sectional shape such as a sector shape. Further, when viewing superconducting coil body 10 in a plan view (when viewing superconducting coil body 10 in a direction along center axis 16), each of first magnetic body 13 and second magnetic body 14 has such a shape (annular shape) that surrounds stator core 123. Further, as shown in Fig. 4, outer circumferential coil body 11b and second magnetic body 14 are connected and fixed to each other by a bonding agent 29 such as an adhesive agent. Such a bonding agent 29 is also provided at connection portions among outer circumferential coil body 11a, inner circumferential coil bodies 12a, 12b, second magnetic body 14, and first magnetic body 13.

As shown in Fig. 2 and Fig. 3, in superconducting coil body 10 included in superconducting motor 100 of the present invention, a magnetic circuit is formed by inner circumferential coil bodies 12a, 12b, outer circumferential coil bodies 11a, 11b, first magnetic body 13, and second magnetic body 14. Further, as shown in Fig. 4, the end surface of second magnetic body 14 facing outer circumferential coil body 11b has end portions projecting outwardly of the surfaces of outer circumferential coil body 11b facing second magnetic body 14. As shown in Fig. 3, projecting portions 19 including the end portions projecting in this manner are formed in regions of first magnetic body 13 and second magnetic body 14 facing inner circumferential coil bodies 12a, 12b and outer circumferential coil bodies 11a, 11b. Accordingly, lines of magnetic flux, in particular, around boundary portions among inner circumferential coil bodies 12a, 12b, outer circumferential coil bodies 11a, 11b, first magnetic body 13, and second magnetic body 14 can be drawn from projecting portions 19 into first magnetic body 13 and second magnetic body 14. In other words, generation of lines of magnetic flux passing through main surfaces 15a, 15b of superconducting wire 15 can be suppressed at the boundary portions. This can suppress the problem of large loss in superconducting coil body 10 due to the generation of lines of magnetic flux passing through main surfaces 15a, 15b of superconducting wire 15 and resultant deterioration of performance of superconducting coil body 10.

It should be noted that as shown in Fig. 3 and Fig. 4, surface portions 37 inclined relative to the direction of extension of main surfaces 15a, 15b of superconducting wire 15 are formed at the end portions of side surfaces 14a of first magnetic body 13 and second magnetic body 14 that are continuous to respective end surfaces thereof facing inner circumferential coil bodies 12a, 12b and outer circumferential coil bodies 11a, 11b. Each of surface portions 37 may be a flat surface or may have a curved shape as shown in Fig. 4 and the like.

### (Second Embodiment)

Referring to Fig. 5, the following describes a superconducting motor according to a second embodiment of the present invention. It should be noted that Fig. 5 corresponds to Fig. 3.

The superconducting motor according to the second embodiment of the present invention has basically the same structure as that of the superconducting motor shown in Fig. 1 to Fig. 4, but is different therefrom in the structure of superconducting coil body 10. Specifically, as shown in Fig. 5, in the superconducting motor according to the second embodiment of the present invention, first magnetic body 13 is formed of two, separated magnetic bodies 23a, 23b. Magnetic body 23a is connected to inner circumferential coil body 12a. Magnetic body 23b is connected to outer circumferential coil body 11a. A space 28 is formed between magnetic body 23a and magnetic body 23b. Likewise, the other magnetic body, i.e., second magnetic body 14 is also formed of two magnetic bodies 24a, 24b. Magnetic body 24a is connected to inner circumferential coil body 12a. Magnetic body 24b is connected to outer circumferential coil body 11b. A space 28 is formed between magnetic body 24a and magnetic body 24b. This space 28 has a sufficiently narrow width. For example, the width may be not less than 0.1 mm and not more than 5 mm.

By first magnetic body 13 and second magnetic body 14 thus configured, a magnetic circuit can be also formed in superconducting coil body 10 because the width of space 28 is sufficiently narrow. Further, superconducting coil body 10 shown in Fig. 5 also provides an effect similar to the effect provided by superconducting coil body 10 shown in Fig. 1 to Fig. 4.

It should be noted that only one of first magnetic body 13 and second magnetic body 14 may be disposed or at least one of magnetic bodies 23a, 23b, 24a, 24b shown in Fig. 5 may be disposed, depending on the device structure of superconducting motor 100.

### (Third Embodiment)

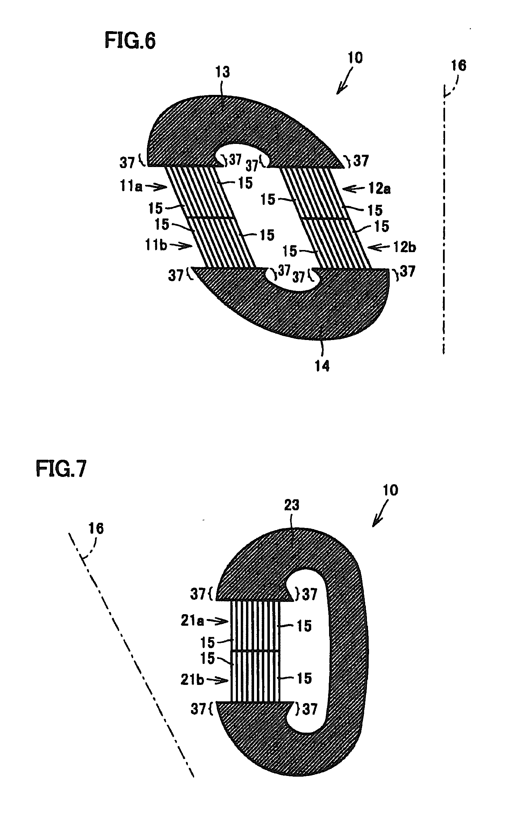

Referring to Fig. 6, the following describes a superconducting motor according to a third embodiment of the present invention. It should be noted that Fig. 6 corresponds to Fig. 3.

The superconducting motor including a superconducting coil body 10 shown in Fig. 6 has basically the same structure as that of superconducting motor 100 shown in Fig. 1 to Fig. 4, but is different therefrom in the shape of superconducting coil body 10. Specifically, as with superconducting coil body 10 shown in Fig. 1 to Fig. 4, in superconducting coil body 10 shown in Fig. 6, the direction of the main surfaces of superconducting wire 15, which forms each of inner circumferential coil bodies 12a, 12b and outer circumferential coil bodies 11a, 11b, crosses center axis 16 of superconducting coil body 10. On the other hand, the end surfaces of inner circumferential coil bodies 12a, 12b and outer circumferential coil bodies 11a, 11b facing first magnetic body 13 and second magnetic body 14 are substantially perpendicular to center axis 16 of superconducting coil body 10. Superconducting coil body 10 thus configured also provides an effect similar to the effect provided by superconducting coil body 10 in the first embodiment described above.

### (Fourth Embodiment)

Referring to Fig. 7, the following describes a superconducting motor according to a fourth embodiment of the present invention. It should be noted that Fig. 7 corresponds to Fig. 3.

The superconducting motor according to the fourth embodiment of the present invention has a similar configuration to that of superconducting motor 100 shown in Fig. 1 to Fig. 4, but is different therefrom in the structure of superconducting coil body 10. Specifically, in the superconducting motor according to the fourth embodiment of the present invention, superconducting coil body 10 is formed of coil bodies 21a, 21b and one magnetic body 23 connected to coil bodies 21a, 21b. Coil bodies 21a, 21b have basically the same structure as the structures of inner circumferential coil bodies 12a, 12b or outer circumferential coil bodies 11a, 11b shown in Fig. 3 and the like. Further, magnetic body 23 has a C-like cross sectional shape as shown in Fig. 7, has one end portion connected to the upper end surface of coil body 21a, and has the other end portion connected to the lower end portion of coil body 21b. In the end portions of magnetic body 23, projecting portions are formed such that outer circumferential side surfaces thereof project outwardly of surfaces of coil bodies 21a, 21b. Surface portions 37, which are outer circumferential side surfaces of the projecting portions, may have curved surfaces as shown in the figure or may have flat surfaces. In superconducting coil body 10 having such a cross sectional shape, a magnetic circuit is formed by coil bodies 21a, 21b and magnetic body 23.

Superconducting coil body 10 thus configured also provides an effect similar to the effect provided by superconducting coil body 10 shown in Fig. 3 and the like.

### (Fifth Embodiment)

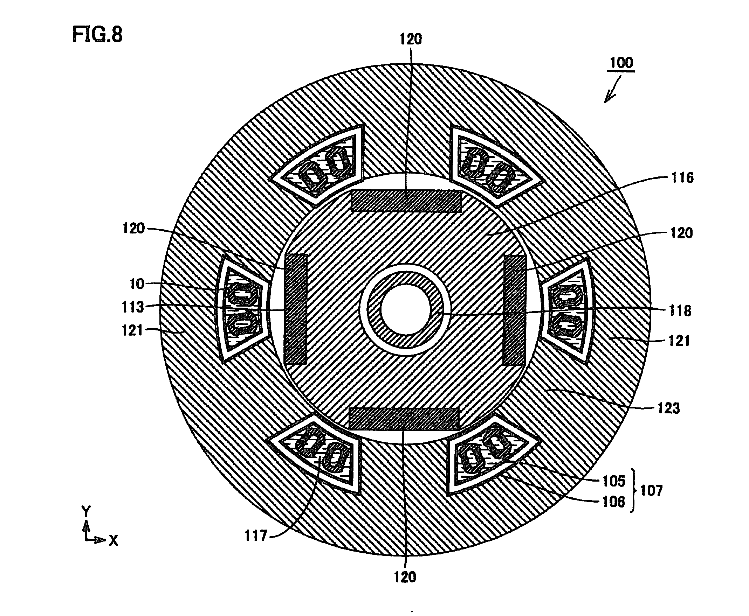

Referring to Fig. 8 to Fig. 11, the following describes a superconducting motor according to the present invention.

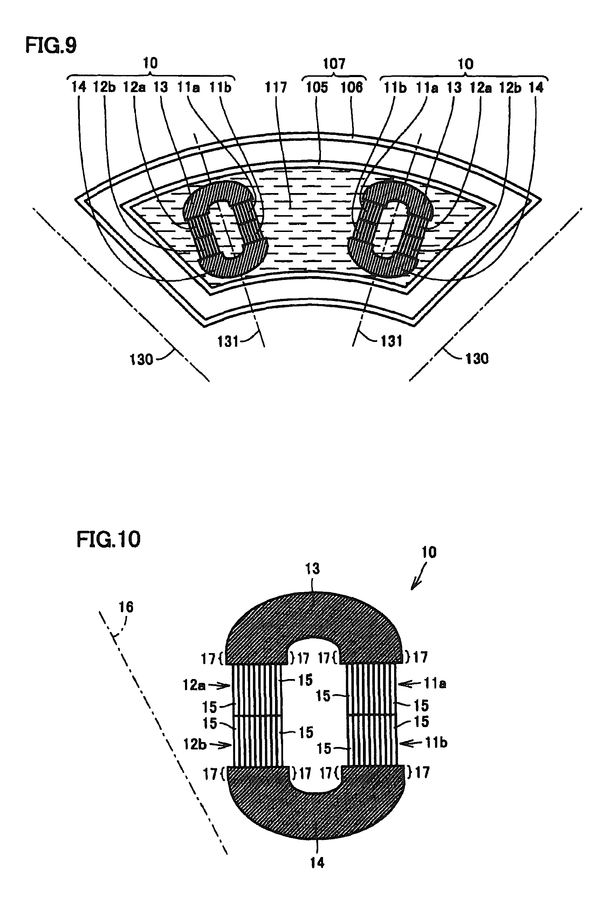

Referring to Fig. 8 and Fig. 9, a superconducting motor 100 according to the present invention includes basically the same structure as that of superconducting motor 100 shown in Fig. 1 and Fig. 2. Specifically, superconducting motor 100 includes a rotor and a stator disposed around the rotor. However, the configuration of each superconducting coil body 10 for the stator is different from that in superconducting motor 100 shown in Fig. 1 and Fig. 2. Referring to Fig. 9 to Fig. 11, the following describes superconducting coil body 10 in the present embodiment.

As shown in Fig. 9 to Fig. 11, superconducting coil body 10 includes: inner circumferential coil bodies 12a, 12b surrounding the outer circumference of stator core 123; outer circumferential coil bodies 11a, 11b disposed to surround the outer circumferential sides of inner circumferential coil bodies 12a, 12b; a first magnetic body 13 disposed to connect the upper end surface of inner circumferential coil body 12a and the upper end surface of outer circumferential coil body 11a to each other; and a second magnetic body 14 disposed to connect the lower end surface of inner circumferential coil body 12b and the lower end surface of outer circumferential coil body 11b to each other. In superconducting coil body 10 shown in Fig. 9 to Fig. 11, the shapes of first magnetic body 13 and second magnetic body 14 are different from those in superconducting coil body 10 shown in Fig. 1 to Fig. 4.

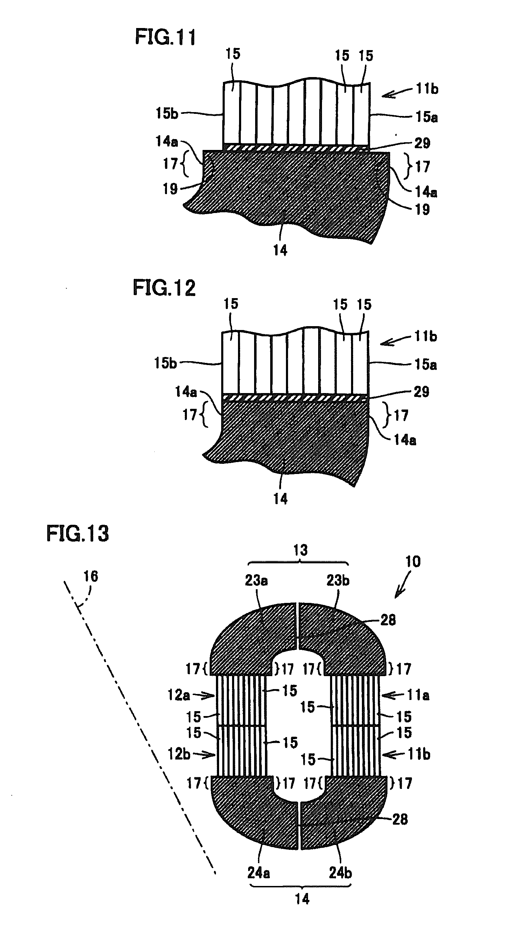

Specifically, as shown in Fig. 11, in second magnetic body 14, flat surface portions 17 extending substantially in parallel with a direction of extension of main surfaces 15a, 15b of superconducting wire 15 are formed at end portions of side surfaces 14a continuous to respective end surfaces thereof facing outer circumferential coil body 11b. As shown in Fig. 10, flat surface portions 17 are formed at side surfaces of regions of first magnetic body 13 and second magnetic body 14 facing inner circumferential coil bodies 12a, 12b and outer circumferential coil bodies 11a, 11b. Accordingly, lines of magnetic force are permitted to extend substantially in parallel with main surfaces 15a, 15b of superconducting wire 15 (see Fig. 11), in particular, at boundary portions among inner circumferential coil bodies 12a, 12b, outer circumferential coil bodies 11a, 11b, first magnetic body 13, and second magnetic body 14. In other words, generation of lines of magnetic flux passing through main surfaces 15a, 15b of superconducting wire 15 can be suppressed at the boundary portions. This can suppress the problem of large loss in superconducting coil body 10 due to the generation of lines of magnetic flux passing through main surfaces 15a, 15b of superconducting wire 15 and resultant deterioration of performance of superconducting coil body 10.

Further, as shown in Fig. 11, the width of second magnetic body 14 is wider than the width of outer circumferential coil body 11b, so that projecting portions 19 are formed in second magnetic body 14 to project outwardly of main surfaces 15a, 15b of superconducting wire 15 of outer circumferential coil body 11b. Because such projecting portions 19 are formed in second magnetic body 14, as with superconducting coil body 10 shown in Fig. 2 to Fig. 4, the lines of magnetic flux around outer circumferential coil body 11b can be drawn into second magnetic body 14 from projecting portions 19. This further ensures that the lines of magnetic flux are less likely to pass through main surfaces 15a, 15b of superconducting wire 15 of outer circumferential coil body 11b.

It should be noted that as shown in Fig. 12, the width of second magnetic body 14 may be substantially the same as the width of outer circumferential coil body 11b. Further, in second magnetic body 14, flat surface portions 17 positioned on substantially the same plane as main surfaces 15a, 15b of superconducting wire 15 (extending substantially in parallel with main surfaces 15a, 15b) are formed at the end portions of side surfaces 14a continuous to the end surfaces thereof facing outer circumferential coil body 11b. Flat surface portions 17 are formed in side surfaces of regions of first magnetic body 13 and second magnetic body 14 facing inner circumferential coil bodies 12a, 12b and outer circumferential coil bodies 11a, 11b. Accordingly, as with superconducting coil body 10 shown in Fig. 11, lines of magnetic force are permitted to extend substantially in parallel with main surfaces 15a, 15b of superconducting wire 15 (see Fig. 12), in particular, at boundary portions among inner circumferential coil bodies 12a, 12b, outer circumferential coil bodies 11a, 11b, first magnetic body 13, and second magnetic body 14. In other words, generation of lines of magnetic flux passing through main surfaces 15a, 15b of superconducting wire 15 can be suppressed at the boundary portions.

### (Sixth Embodiment)

Referring to Fig. 13, the following describes a superconducting motor according to a sixth embodiment of the present invention. It should be noted that Fig. 13 corresponds to Fig. 10.

The superconducting motor according to the sixth embodiment of the present invention has basically the same structure as that of the superconducting motor shown in Fig. 8 to Fig. 11, but is different therefrom in the structure of superconducting coil body 10. Specifically, as shown in Fig. 13, in the superconducting motor according to the sixth embodiment of the present invention, first magnetic body 13 is formed of two, separated magnetic bodies 23a, 23b. Magnetic body 23a is connected to inner circumferential coil body 12a. Magnetic body 23b is connected to outer circumferential coil body 11a. A space 28 is formed between magnetic body 23a and magnetic body 23b. Likewise, the other magnetic body, i.e., second magnetic body 14 is also formed of two magnetic bodies 24a, 24b. Magnetic body 24a is connected to inner circumferential coil body 12a. Magnetic body 24b is connected to outer circumferential coil body 11b. A space 28 is formed between magnetic body 24a and magnetic body 24b. This space 28 has a sufficiently narrow width. For example, the width may be not less than 0.1 mm and not more than 5 mm.

By first magnetic body 13 and second magnetic body 14 thus configured, a magnetic circuit can be also formed in superconducting coil body 10 because the width of space 28 is sufficiently narrow. Further, superconducting coil body 10 shown in Fig. 13 also provides an effect similar to the effect provided by superconducting coil body 10 shown in Fig. 8 to Fig. 11.

It should be noted that as with superconducting coil body 10 shown in Fig. 5, only one of first magnetic body 13 and second magnetic body 14 may be disposed or at least one of magnetic bodies 23a, 23b, 24a, 24b shown in Fig. 13 may be disposed, depending on the device structure of superconducting motor 100.

### (Seventh Embodiment)

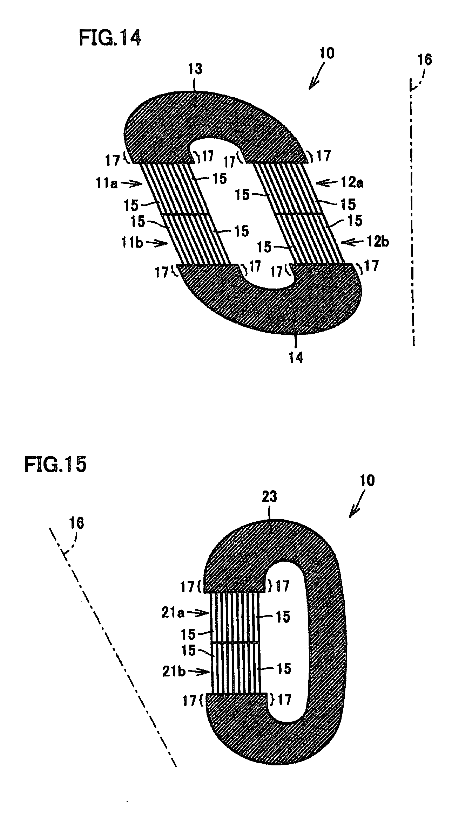

Referring to Fig. 14, the following describes a superconducting motor according to a seventh embodiment of the present invention. It should be noted that Fig. 14 corresponds to Fig. 10.

The superconducting motor including a superconducting coil body 10 shown in Fig. 14 has basically the same structure as that of superconducting motor 100 shown in Fig. 8 to Fig. 11, but is different therefrom in the shape of superconducting coil body 10. Specifically, as with superconducting coil body 10 shown in Fig. 8 to Fig. 11, superconducting coil body 10 shown in Fig. 14 is disposed such that the direction of the main surfaces of superconducting wire 15, which forms each of inner circumferential coil bodies 12a, 12b and outer circumferential coil bodies 11a, 11b, crosses center axis 16 of superconducting coil body 10. On the other hand, the end surfaces of inner circumferential coil bodies 12a, 12b and outer circumferential coil bodies 11a, 11b facing first magnetic body 13 and second magnetic body 14 are substantially perpendicular to center axis 16 of superconducting coil body 10. Superconducting coil body 10 thus configured also provides an effect similar to the effect provided by superconducting coil body 10 in the above-described fifth embodiment.

### (Eighth Embodiment)

Referring to Fig. 15, the following describes a superconducting motor according to an eighth embodiment of the present invention. It should be noted that Fig. 15 corresponds to Fig. 10.

The superconducting motor according to the eighth embodiment of the present invention has a similar configuration to that of superconducting motor 100 shown in Fig. 8 to Fig. 11, but is different therefrom in the structure of superconducting coil body 10. Specifically, in the superconducting motor according to the eighth embodiment of the present invention, superconducting coil body 10 is formed of coil bodies 21a, 21b and one magnetic body 23 connected to coil bodies 21a, 21b. Coil bodies 21a, 21b have basically the same structure as the structures of inner circumferential coil bodies 12a, 12b or outer circumferential coil bodies 11a, 11b shown in Fig. 10 and the like. Further, magnetic body 23 has a C-like cross sectional shape as shown in Fig. 15, has one end portion connected to the upper end surface of coil body 21a, and has the other end portion connected to the lower end portion of coil body 21b. In the end portions of magnetic body 23, outer circumferential side surfaces thereof serve as flat surface portions 17 extending in substantially the same direction as the direction of extension of the main surfaces of superconducting wire 15 of each of coil bodies 21a, 21b. In superconducting coil body 10 having such a cross sectional shape, a magnetic circuit is formed by coil bodies 21a, 21b and magnetic body 23.

Superconducting coil body 10 thus configured also provides an effect similar to the effect provided by superconducting coil body 10 shown in Fig. 10 and the like.

### (Ninth Embodiment)

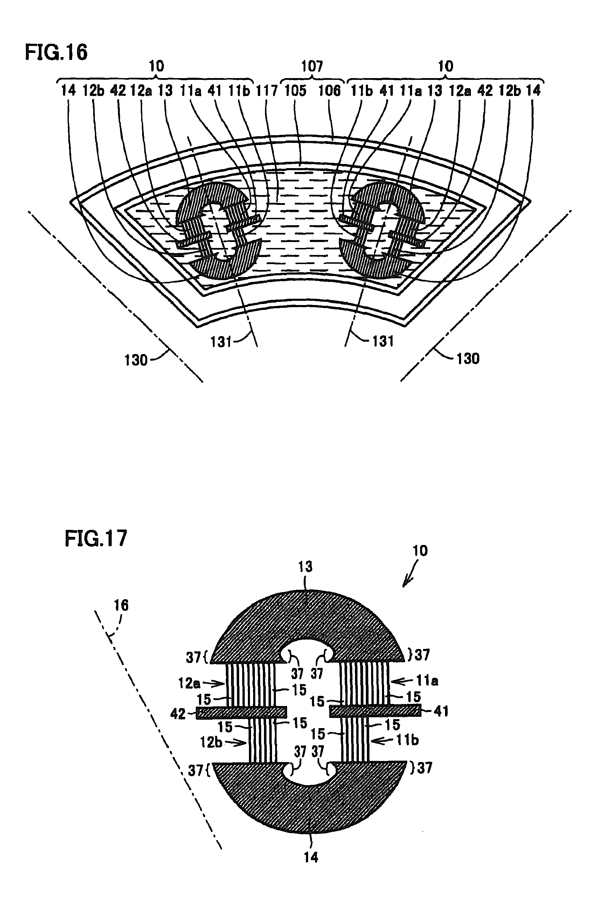

Referring to Fig. 16 and Fig. 17, the following describes a superconducting motor according to a ninth embodiment of the present invention.

Referring to Fig. 16 and Fig. 17, the superconducting motor according to the ninth embodiment of the present invention has basically the same structure as that of superconducting motor 100 shown in Fig. 1 and Fig. 2, and provides a similar effect (lines of magnetic flux around the boundary portions among inner circumferential coil bodies 12a, 12b, outer circumferential coil bodies 11a, 11b, first magnetic body 13, and second magnetic body 14 can be drawn into first magnetic body 13 and second magnetic body 14 via the projecting portions of first magnetic body 13 and second magnetic body 14, thereby suppressing generation of lines of magnetic flux passing through the main surfaces of superconducting wire 15 at the boundary portions). Further, the superconducting motor shown in Fig. 16 and Fig. 17 is different from the superconducting motor shown in Fig. 1 and Fig. 2 in terms of the structure of superconducting coil body 10.

Specifically, in the superconducting motor according to the ninth embodiment of the present invention, an intermediate magnetic circuit member 42 is disposed between inner circumferential coil body 12a and inner circumferential coil body 12b of superconducting coil body 10. Intermediate magnetic circuit member 42 has an annular plan shape as with those of inner circumferential coil bodies 12a, 12b, and has a width (width in the leftward/rightward direction in Fig. 17) larger than the thickness of each of inner circumferential coil bodies 12a, 12b. Intermediate magnetic circuit member 42 can be made of any material as long as it is a magnetic body, but it is preferable to employ the same material as the material of first magnetic body 13 or second magnetic body 14.

Inner circumferential coil body 12a and inner circumferential coil body 12b are different in thickness in the radial direction when viewed from the center axis of the coil (width in the leftward/rightward direction in Fig. 17). Specifically, the thickness of inner circumferential coil body 12b is smaller than the thickness of inner circumferential coil body 12a. Because the thickness of inner circumferential coil body 12b disposed in a position closer to center axis 130 of the stator core shown in Fig. 16 is made smaller than the thickness of inner circumferential coil body 12a disposed at a position relatively away from center axis 130 in this manner, inner circumferential coil body 12b can be disposed at a position away from center axis 130 of the stator core as far as possible. In this way, magnetic flux of leakage magnetic field is less likely to pass through the main surfaces of each of inner circumferential coil body 12b.

Further, magnetic field generated by current flowing in inner circumferential coil bodies 12a, 12b can travel around the current. If inner circumferential coil bodies 12a, 12b having the same number of turns (having the same thickness) are disposed on each other, magnetic flux density vectors are canceled by each other between inner circumferential coil bodies 12a, 12b. Accordingly, in a portion (connection portion) where inner circumferential coil body 12a and inner circumferential coil body 12b face each other, a ratio of lines of magnetic flux passing through the main surfaces of superconducting wire 15 of the coil body is small. This results in no large loss taking place at this connection portion.

On the other hand, if inner circumferential coil bodies 12a, 12b having different numbers of turns (different thicknesses) are disposed on each other as shown in Fig. 16 and Fig. 17, a step portion is formed at the connection portion between inner circumferential coil bodies 12a, 12b. With such a step portion, the magnetic flux density vectors resulting from the currents flowing in inner circumferential coil bodies 12a, 12b are not canceled by each other completely. This results in a large ratio of the lines of magnetic flux passing through the main surfaces of superconducting wire 15. As a result, large loss takes place at this step portion. To address this, in superconducting coil body 10 according to the present invention shown in Fig. 16 and Fig. 17, intermediate magnetic circuit member 42 is disposed between inner circumferential coil bodies 12a, 12b, whereby the direction of lines of magnetic flux resulting from current flowing in one of inner circumferential coil body 12a and inner circumferential coil body 12b can be prevented from directly influencing the other inner circumferential coil body. Accordingly, even though inner circumferential coil bodies 12a, 12b having different numbers of turns are disposed on each other, the ratio of the lines of magnetic flux passing through the main surfaces of superconducting wire 15 of inner circumferential coil bodies 12a, 12b can be suppressed from being increased.

Likewise, in superconducting coil body 10 shown in Fig. 16 and Fig. 17, an intermediate magnetic circuit member 41 is also disposed between outer circumferential coil body 11a and outer circumferential coil body 11b of superconducting coil body 10. Intermediate magnetic circuit member 41 has an annular plan shape as with those of outer circumferential coil bodies 11a, 11b, and has a width (width in the leftward/rightward direction in Fig. 17) larger than the thickness of each of outer circumferential coil bodies 11a, 11b. As with intermediate magnetic circuit member 42, intermediate magnetic circuit member 41 can be made of any material as long as it is a magnetic body, but it is preferable to employ the same material as the material of first magnetic body 13 or second magnetic body 14.

Outer circumferential coil body 11a and outer circumferential coil body 11b are different in thickness in the radial direction when viewed from the center axis of the coil (width in the leftward/rightward direction in Fig. 17, i.e., the number of turns of superconducting wire 15). Specifically, the thickness of outer circumferential coil body 11b is smaller than the thickness of outer circumferential coil body 11a. Because the thickness (the number of turns) of outer circumferential coil body 11b disposed in a position closer to center axis 130 of the stator core shown in Fig. 16 is made smaller than the thickness (the number of turns) of outer circumferential coil body 11a disposed at a position relatively away from center axis 130 in this manner, magnetic flux of leakage magnetic field is less likely to pass through the main surfaces of outer circumferential coil body 11b. Further, intermediate magnetic circuit member 41 thus disposed between outer circumferential coil bodies 11a, 11b disposed on each other and having different thicknesses provides effective reduction of the direct influence of the direction of the lines of magnetic flux, which result from current flowing in one of outer circumferential coil body 11a and outer circumferential coil body 11b, over the other inner circumferential coil body as with the case where intermediate magnetic circuit member 42 is disposed between inner circumferential coil bodies 12a, 12b. Accordingly, even though outer circumferential coil bodies 11a, 11b having different numbers of turns are disposed on each other, the ratio of the lines of magnetic flux passing through the main surfaces of superconducting wire 15 of each of outer circumferential coil bodies 11a, 11b can be suppressed from being increased.

### (Tenth Embodiment)

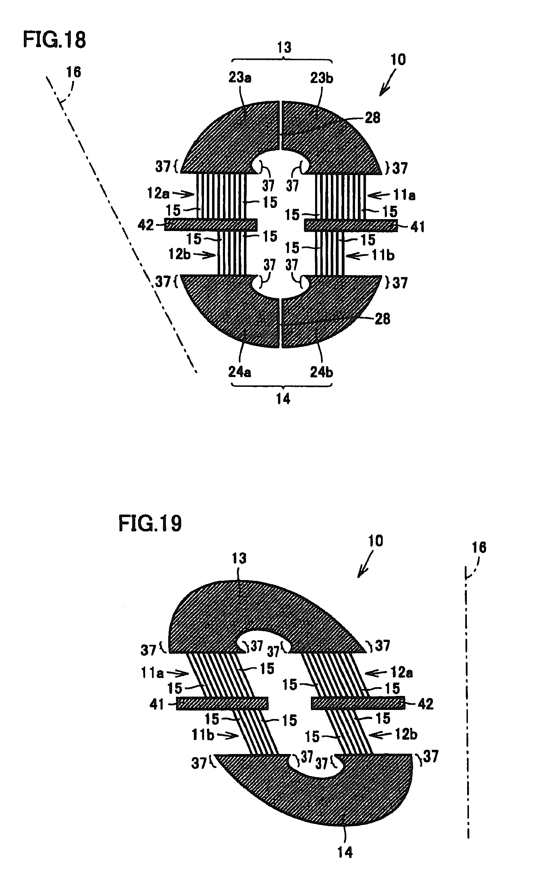

Referring to Fig. 18, the following describes a superconducting motor according to a tenth embodiment of the present invention. It should be noted that Fig. 18 corresponds to Fig. 17.

The superconducting motor according to the tenth embodiment of the present invention has basically the same structure as that of the superconducting motor shown in Fig. 16 and Fig. 17, but is different therefrom in the structure of superconducting coil body 10. Specifically, as shown in Fig. 18, in the superconducting motor according to the tenth embodiment of the present invention, first magnetic body 13 is formed of two, separated magnetic bodies 23a, 23b as with superconducting coil body 10 shown in Fig. 5. Magnetic body 23a is connected to inner circumferential coil body 12a. Magnetic body 23b is connected to outer circumferential coil body 11a. A space 28 is formed between magnetic body 23a and magnetic body 23b. Likewise, the other magnetic body, i.e., second magnetic body 14 is also formed of two magnetic bodies 24a, 24b. Magnetic body 24a is connected to inner circumferential coil body 12a. Magnetic body 24b is connected to outer circumferential coil body 11b. A space 28 is formed between magnetic body 24a and magnetic body 24b. This space 28 has a sufficiently narrow width. For example, the width may be not less than 0.1 mm and not more than 5 mm.

By first magnetic body 13 and second magnetic body 14 thus configured, a magnetic circuit can be also formed in superconducting coil body 10 because the width of space 28 is sufficiently narrow. Further, in superconducting coil body 10 shown in Fig. 18, intermediate magnetic circuit members 41, 42 are disposed as with superconducting coil body 10 shown in Fig. 16 and Fig. 17. Hence, superconducting coil body 10 shown in Fig. 18 also provides an effect similar to the effect provided by superconducting coil body 10 shown in Fig. 16 and Fig. 17.

It should be noted that only one of first magnetic body 13 and second magnetic body 14 may be disposed or at least one of magnetic bodies 23a, 23b, 24a, 24b shown in Fig. 18 may be disposed, depending on the device structure of superconducting motor 100.

### (Eleventh Embodiment)

Referring to Fig. 19, the following describes a superconducting motor according to a third embodiment of the present invention. It should be noted that Fig. 19 corresponds to Fig. 17.

The superconducting motor including a superconducting coil body 10 shown in Fig. 19 has basically the same structure as that of the superconducting motor shown in Fig. 16 and Fig. 17, but is different therefrom in the shape of superconducting coil body 10. Specifically, as with superconducting coil body 10 shown in Fig. 16 and Fig. 17, in superconducting coil body 10 shown in Fig. 19, the direction of the main surfaces of superconducting wire 15, which forms each of inner circumferential coil bodies 12a, 12b and outer circumferential coil bodies 11a, 11b, crosses center axis 16 of superconducting coil body 10. On the other hand, the end surfaces of inner circumferential coil bodies 12a, 12b and outer circumferential coil bodies 11a, 11b facing first magnetic body 13 and second magnetic body 14 are substantially perpendicular to center axis 16 of superconducting coil body 10. Further, the end surfaces of inner circumferential coil bodies 12a, 12b facing intermediate magnetic circuit member 42 and the end surfaces of outer circumferential coil bodies 11a, 11b facing intermediate magnetic circuit member 41 are also substantially perpendicular to center axis 16 described above. Superconducting coil body 10 thus configured also provides an effect similar to the effect provided by superconducting coil body 10 shown in Fig. 16 and Fig. 17.

### (Twelfth Embodiment)

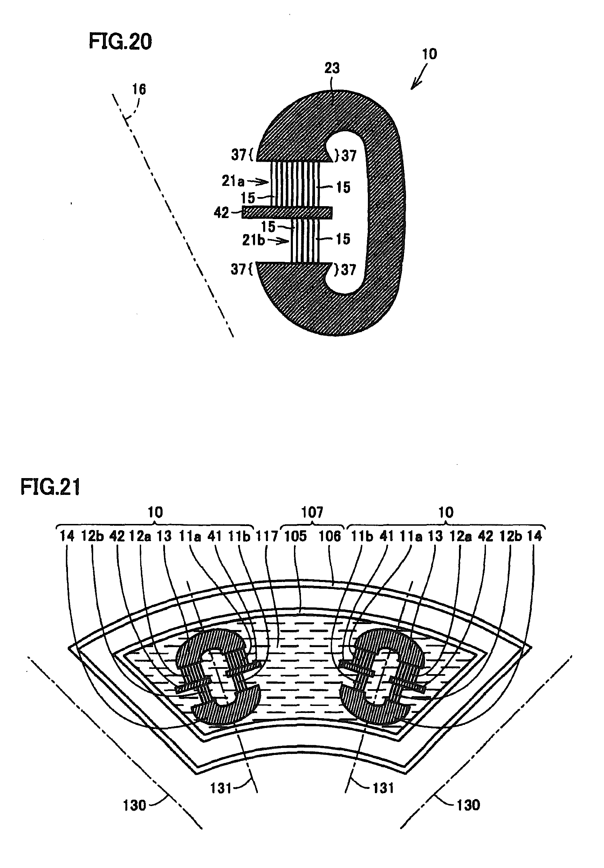

Referring to Fig. 20, the following describes a superconducting motor according to a twelfth embodiment of the present invention. It should be noted that Fig. 20 corresponds to Fig. 17.

The superconducting motor according to the twelfth embodiment of the present invention has a similar configuration to that of the superconducting motor shown in Fig. 16 and Fig. 17, but is different therefrom in the structure of superconducting coil body 10. Specifically, in the superconducting motor according to the twelfth embodiment of the present invention, superconducting coil body 10 is formed of coil bodies 21a, 21b, an intermediate magnetic circuit member 42 disposed between coil bodies 21a, 21b disposed on each other, and a magnetic body 23 connected to upper and lower end surfaces of coil bodies 21a, 21b. Coil bodies 21a, 21b have basically the same structure as the structures of inner circumferential coil bodies 12a, 12b or outer circumferential coil bodies 11a, 11b shown in Fig. 17 and the like. Intermediate magnetic circuit member 42 has the same structure as the structure of intermediate magnetic circuit member 42 shown in Fig. 17. Further, magnetic body 23 has a C-like cross sectional shape as shown in Fig. 20, has one end portion connected to the upper end surface of coil body 21a, and has the other end portion connected to the lower end portion of coil body 21b. In the end portions of magnetic body 23, projecting portions are formed such that outer circumferential side surfaces thereof project outwardly of surfaces of coil bodies 21a, 21b. Surface portions 37, which are outer circumferential side surfaces of the projecting portions, may have curved surfaces as shown in the figure or may have flat surfaces. In superconducting coil body 10 having such a cross sectional shape, a magnetic circuit is formed by coil bodies 21a, 21b, intermediate magnetic circuit member 42, and magnetic body 23.

Superconducting coil body 10 thus configured also provides an effect similar to the effect provided by superconducting coil body 10 shown in Fig. 17 and the like.

### (Thirteenth Embodiment)

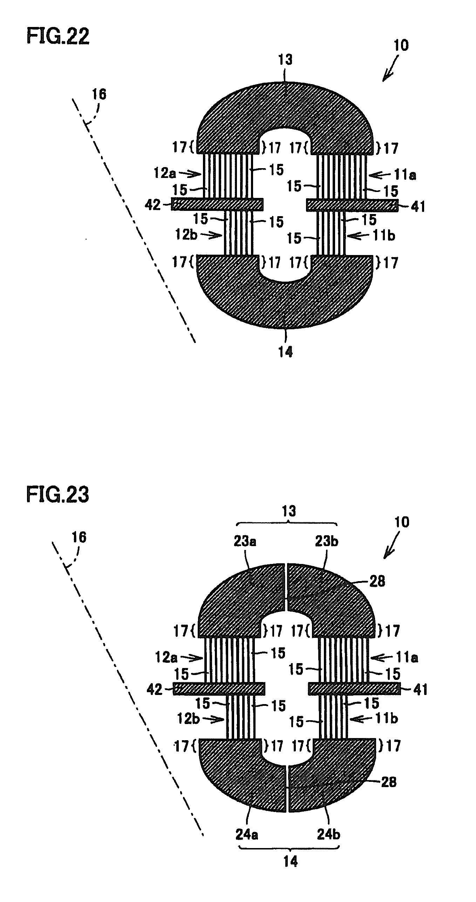

Referring to Fig. 21 and Fig. 22, the following describes a superconducting motor according to the present invention. It should be noted that Fig. 21 and Fig. 22 correspond to Fig. 16 and Fig. 17.

Referring to Fig. 21 and Fig. 22, the superconducting motor according to the present invention includes basically the same structure as that of the superconducting motor shown in Fig. 16 and Fig. 17, and provides a similar effect. Specifically, as with superconducting motor 100 shown in Fig. 1, the superconducting motor includes a rotor and a stator disposed around the rotor. However, the configuration of each superconducting coil body 10 for the stator is different from superconducting motor 100 shown in Fig. 16 and Fig. 17. Referring to Fig. 21 and Fig. 22, the following describes superconducting coil body 10 in the present embodiment.

As with the superconducting motor shown in Fig. 1, superconducting coil body 10 includes: inner circumferential coil bodies 12a, 12b (see Fig. 21) surrounding the outer circumference of stator core 123 (see Fig. 1); outer circumferential coil bodies 11a, 11b disposed to surround the outer circumferential sides of inner circumferential coil bodies 12a, 12b; an intermediate magnetic circuit member 42 disposed between inner circumferential coil bodies 12a, 12b disposed on each other; an intermediate magnetic circuit member 41 disposed between outer circumferential coil bodies 11a, 11b disposed on each other; a first magnetic body 13 disposed to connect the upper end surface of inner circumferential coil body 12a and the upper end surface of outer circumferential coil body 11a to each other; and a second magnetic body 14 disposed to connect the lower end surface of inner circumferential coil body 12b and the lower end surface of outer circumferential coil body 11b to each other. In superconducting coil body 10 shown in Fig. 21 and Fig. 22, as with superconducting coil body 10 shown in Fig. 16 and Fig. 17, intermediate magnetic circuit members 41, 42 thus disposed provide suppression of the problem of direct influence of the direction of the lines of magnetic flux, which results from currents flowing in one of outer circumferential coil bodies 11a, 11b disposed on each other and one of inner circumferential coil bodies 12a, 12b disposed on each other, over the other coil bodies. In superconducting coil body 10 shown in Fig. 21 and Fig. 22, the shapes of first magnetic body 13 and second magnetic body 14 are different from those in superconducting coil body 10 shown in Fig. 16 and Fig. 17.

Specifically, as with superconducting coil body 10 shown in Fig. 11, in second magnetic body 14 of superconducting coil body 10 shown in Fig. 21 and Fig. 22, flat surface portions 17 extending substantially in parallel with a direction of extension of main surfaces 15a, 15b (see Fig. 11) of superconducting wire 15 are formed at end portions of side surfaces 14a (see Fig. 11) continuous to respective end surfaces thereof facing outer circumferential coil body 11b. As shown in Fig. 22, flat surface portions 17 are formed at side surfaces of regions of first magnetic body 13 and second magnetic body 14 facing inner circumferential coil bodies 12a, 12b and outer circumferential coil bodies 11a, 11b. Accordingly, lines of magnetic force are permitted to extend substantially in parallel with main surfaces 15a, 15b of superconducting wire 15 (see Fig. 11), in particular, at boundary portions among inner circumferential coil bodies 12a, 12b, outer circumferential coil bodies 11a, 11b, first magnetic body 13, and second magnetic body 14. In other words, generation of lines of magnetic flux passing through main surfaces 15a, 15b (see Fig. 11) of superconducting wire 15 can be suppressed at the boundary portions. This can suppress the problem of large loss in superconducting coil body 10 due to the generation of lines of magnetic flux passing through the main surfaces of superconducting wire 15 and resultant deterioration of performance of superconducting coil body 10.

Further, as shown in Fig. 22, the width of second magnetic body 14 is wider than the width of outer circumferential coil body 11b, so that projecting portions 19 (see Fig. 11) are formed in second magnetic body 14 to project outwardly of main surfaces 15a, 15b (see Fig. 11) of superconducting wire 15 of outer circumferential coil body 11b as with superconducting coil body 10 shown in Fig. 11. Because such projecting portions 19 (see Fig. 11) are formed in second magnetic body 14, as with superconducting coil body 10 shown in Fig. 2 to Fig. 4, the lines of magnetic flux around outer circumferential coil body 11b can be drawn into second magnetic body 14 via projecting portions 19. This further ensures that the lines of magnetic flux are less likely to pass through main surfaces 15a, 15b of superconducting wire 15 of outer circumferential coil body 11b.

It should be noted that in superconducting coil body 10 shown in Fig. 21 and Fig. 22, as shown in Fig. 12, the width of second magnetic body 14 may be substantially the same as the width of outer circumferential coil body 11b. Further, in this case, in second magnetic body 14, flat surface portions 17 (see Fig. 12) positioned on substantially the same plane as main surfaces 15a, 15b (see Fig. 12) of superconducting wire 15 (extending substantially in parallel with main surfaces 15a, 15b) may be formed at the end portions of side surface 14a (see Fig. 12) continuous to the end surfaces thereof facing outer circumferential coil body 11b.

Flat surface portions 17 (see Fig. 12) may be formed at side surfaces of regions of first magnetic body 13 and second magnetic body 14 facing inner circumferential coil bodies 12a, 12b and outer circumferential coil bodies 11a, 11b. In this way, as with superconducting coil body 10 shown in Fig. 12, lines of magnetic force are permitted to extend substantially in parallel with main surfaces 15a, 15b (see Fig. 12) of superconducting wire 15, in particular, at boundary portions among inner circumferential coil bodies 12a, 12b, outer circumferential coil bodies 11a, 11b, first magnetic body 13, and second magnetic body 14. In other words, generation of lines of magnetic flux passing through main surfaces 15a, 15b of superconducting wire 15 can be suppressed at the boundary portions.

### (Fourteenth Embodiment)

Referring to Fig. 23, the following describes a superconducting motor according to a fourteenth embodiment of the present invention. It should be noted that Fig. 23 corresponds to Fig. 22.

The superconducting motor according to the fourteenth embodiment of the present invention has basically the same structure as that of the superconducting motor shown in Fig. 21 and Fig. 22, but is different therefrom in the structure of superconducting coil body 10. Specifically, as shown in Fig. 23, in the superconducting motor according to the fourteenth embodiment of the present invention, first magnetic body 13 is formed of two, separated magnetic bodies 23a, 23b. Magnetic body 23a is connected to inner circumferential coil body 12a. Magnetic body 23b is connected to outer circumferential coil body 11a. A space 28 is formed between magnetic body 23a and magnetic body 23b. Likewise, the other magnetic body, i.e., second magnetic body 14 is also formed of two magnetic bodies 24a, 24b. Magnetic body 24a is connected to inner circumferential coil body 12a. Magnetic body 24b is connected to outer circumferential coil body 11b. A space 28 is formed between magnetic body 24a and magnetic body 24b. This space 28 has a sufficiently narrow width. For example, the width may be not less than 0.1 mm and not more than 5 mm.

By first magnetic body 13 and second magnetic body 14 thus configured, a magnetic circuit can be also formed in superconducting coil body 10 because the width of space 28 is sufficiently narrow. Further, superconducting coil body 10 shown in Fig. 23 also provides an effect similar to the effect provided by superconducting coil body 10 shown in Fig. 21 and Fig. 22, such as the effect provided by intermediate magnetic circuit members 41, 42 or the effect provided by forming flat surface portion 17, projecting portion 19 (see Fig. 11), and the like.

It should be noted that only one of first magnetic body 13 and second magnetic body 14 may be disposed or at least one of magnetic bodies 23a, 23b, 24a, 24b shown in Fig. 23 may be disposed, depending on the device structure of superconducting motor 100, as with superconducting coil body 10 shown in Fig. 5. Further, if the number of turns in inner circumferential coil body 12a and the number of turns in inner circumferential coil body 12b are different from each other as shown in Fig. 23 (if they are different from each other in thickness), it is particularly preferable to dispose intermediate magnetic circuit member 42.

### (Fifteenth Embodiment)

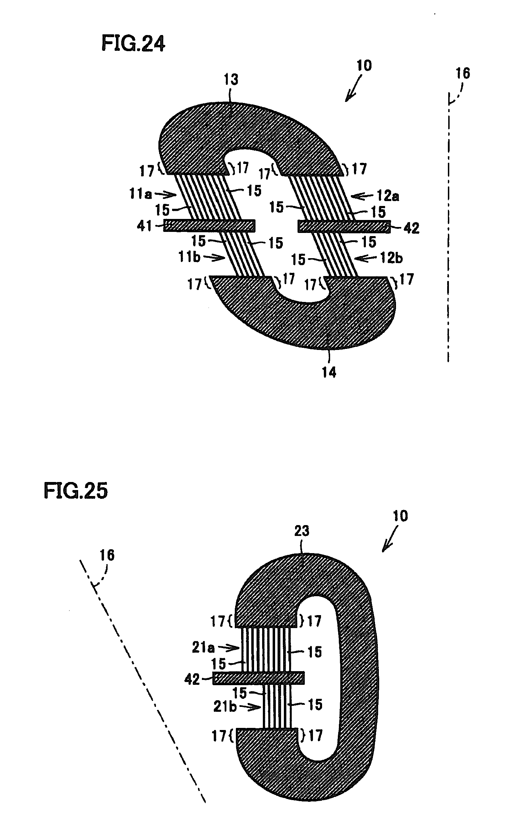

Referring to Fig. 24, the following describes a superconducting motor according to a fifteenth embodiment of the present invention. It should be noted that Fig. 24 corresponds to Fig. 22.

The superconducting motor including a superconducting coil body 10 shown in Fig. 24 has basically the same structure as that of the superconducting motor shown in Fig. 21 and Fig. 22, but is different therefrom in the shape of superconducting coil body 10. Specifically, as with superconducting coil body 10 shown in Fig. 21 and Fig. 22, superconducting coil body 10 shown in Fig. 24 is disposed such that the direction of the main surfaces of superconducting wire 15, which forms each of inner circumferential coil bodies 12a, 12b and outer circumferential coil bodies 11a, 11b, crosses center axis 16 of superconducting coil body 10. On the other hand, the end surfaces of inner circumferential coil bodies 12a, 12b and outer circumferential coil bodies 11a, 11b facing first magnetic body 13 and second magnetic body 14, as well as the main surfaces of intermediate magnetic circuit members 41, 42 (surfaces facing inner circumferential coil bodies 12a, 12b or outer circumferential coil bodies 11a, 11b) are substantially perpendicular to center axis 16 of superconducting coil body 10. Superconducting coil body 10 thus configured also provides an effect similar to the effect provided by superconducting coil body 10 of the above-described thirteenth embodiment.

### (Sixteenth Embodiment)

Referring to Fig. 25, the following describes a superconducting motor according to a sixteenth embodiment of the present invention. It should be noted that Fig. 25 corresponds to Fig. 22.

The superconducting motor according to the sixteenth embodiment of the present invention has a similar configuration to that of the superconducting motor shown in Fig. 21 and Fig. 22, but is different therefrom in the structure of superconducting coil body 10. Specifically, in the superconducting motor according to the sixteenth embodiment of the present invention, superconducting coil body 10 is formed of coil bodies 21a, 21b, an intermediate magnetic circuit member 42 disposed between coil bodies 21a, 21b disposed on each other, and one magnetic body 23 connected to the upper and lower ends of coil bodies 21a, 21b. Coil bodies 21a, 21b have basically the same structures as the structures of inner circumferential coil bodies 12a, 12b or outer circumferential coil bodies 11a, 11b shown in Fig. 22 and the like. Intermediate magnetic circuit member 42 has the same structure as the structure of intermediate magnetic circuit member 42 shown in Fig. 22 and the like. Further, magnetic body 23 has a C-like cross sectional shape in a direction along center axis 16 as shown in Fig. 25, has one end portion connected to the upper end surface of coil body 21a, and has the other end portion connected to the lower end portion of coil body 21b. In the end portions of magnetic body 23, outer circumferential side surfaces thereof serve as flat surface portions 17 extending in substantially the same direction as the direction of extension of the main surfaces of superconducting wire 15 of each of coil bodies 21a, 21b. In superconducting coil body 10 having such a cross sectional shape, a magnetic circuit is formed by coil bodies 21a, 21b, intermediate magnetic circuit member 42, and magnetic body 23.

Superconducting coil body 10 thus configured also provides an effect similar to the effect provided by superconducting coil body 10 shown in Fig. 22 and the like.

### (Seventeenth Embodiment)

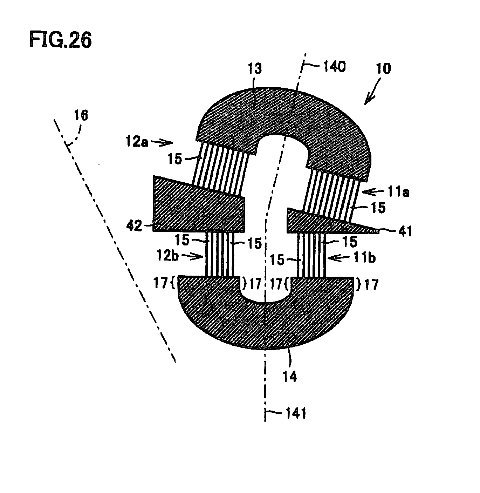

Referring to Fig. 26, the following describes a superconducting motor according to a seventeenth embodiment of the present invention. It should be noted that Fig. 26 corresponds to Fig. 22.

The superconducting motor according to the seventeenth embodiment of the present invention has a configuration similar to that of the superconducting motor shown in Fig. 21 and Fig. 22, but is different therefrom in the structure of superconducting coil body 10. Specifically, in the superconducting motor according to the seventeenth embodiment of the present invention, the upper surface of each of intermediate magnetic circuit members 41, 42 (surface facing inner circumferential coil body 12a or outer circumferential coil body 11a) and the lower surface thereof (surface facing inner circumferential coil body 12b or outer circumferential coil body 11b) are not parallel to each other, and are formed to extend in a direction in which they cross each other. When viewing from a different point of view, the upper surface of each of intermediate magnetic circuit members 41, 42 is inclined relative to the lower surface thereof.

In this way, there can be provided an effect similar to the effect provided when using superconducting coil body 10 shown in Fig. 21 and Fig. 22. Further, superconducting coil body 10 can be configured such that a direction axis 140 along the main surfaces of superconducting wire 15 of inner circumferential coil body 12a or outer circumferential coil body 11a and a direction axis 141 along the main surfaces of superconducting wire 15 of inner circumferential coil body 12b or outer circumferential coil body 11b cross each other. In this way, the positions of inner circumferential coil bodies 12a, 12b and outer circumferential coil bodies 11a, 11b relative to center axis 16 can be adjusted by changing the shapes of intermediate magnetic circuit members 41, 42 (for example, an angle of the upper surface of each of intermediate magnetic circuit members 41, 42 relative to the lower surface thereof, the thickness of each of intermediate magnetic circuit members 41, 42, and/or the like). Further, intermediate magnetic circuit members 41, 42 shown in Fig. 26 may be applied to superconducting coil body 10 shown in Fig. 16 to Fig. 25.

It should be noted that in superconducting coil body 10 shown in Fig. 16 to Fig. 26, the number of turns may be changed in one of inner circumferential coil bodies 12a, 12b or outer circumferential coil bodies 11a, 11b disposed on each other. For example, the number of turns in inner circumferential coil body 12a may be more than the number of turns in inner circumferential coil body 12b, and the number of turns in outer circumferential coil body 11a may be the same as the number of turns in outer circumferential coil body 11b. Further, in this case, intermediate magnetic circuit member 42 may be disposed at the portion at which the coil bodies having different numbers of turns are disposed on each other (for example, between inner circumferential coil body 12a and inner circumferential coil body 12b), and no intermediate magnetic circuit member may be disposed between outer circumferential coil body 11a and outer circumferential coil body 11b having the same number of turns (outer circumferential coil bodies 11a, 11b may be disposed on each other directly).

### (Eighteenth Embodiment)

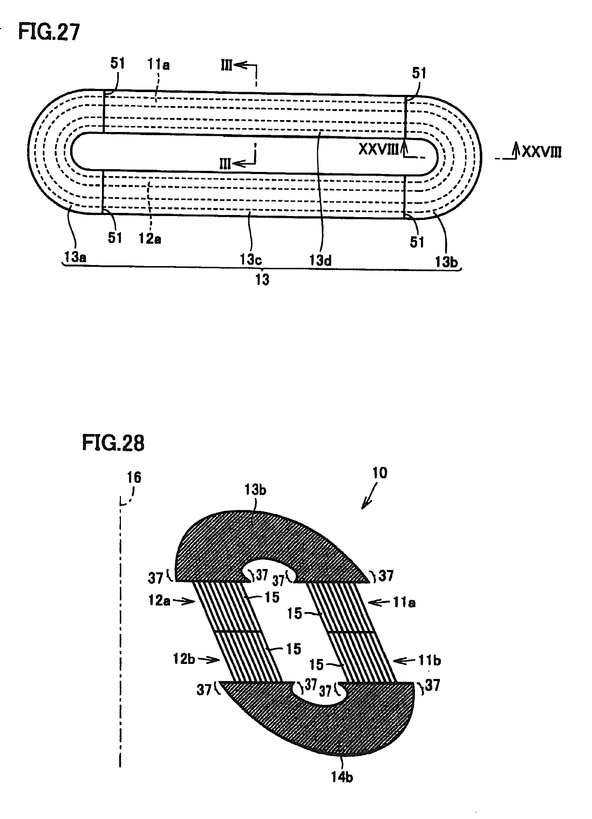

Referring to Fig. 27 and Fig. 28, the following describes a superconducting motor according to an eighteenth embodiment of the present invention. It should be noted that Fig. 28 is a schematic cross sectional view taken along a line segment XXVIII-XXVIII in Fig. 27. Further, the cross sectional shape of the superconducting coil body along a line segment III-III of Fig. 27 is the same as the cross sectional shape of the superconducting coil body shown in Fig. 3.

The superconducting motor according to the eighteenth embodiment of the present invention has basically the same structure as that of the superconducting motor shown in Fig. 1 to Fig. 4, but is different therefrom in the structure of superconducting coil body 10. Specifically, as shown in Fig. 27 and Fig. 28, in the superconducting motor according to the eighteenth embodiment of the present invention, a first magnetic body 13 is formed by joining a plurality of component members to one another, and is disposed to provide connection between the upper end surfaces of outer circumferential coil body 11a and inner circumferential coil body 12a each having an annular (for example, racetrack type or saddle type) plan shape. It should be noted that although not shown in Fig. 27, a second magnetic body is disposed to provide connection between the lower end surface of outer circumferential coil body 11b disposed to be disposed on outer circumferential coil body 11a and the lower end surface of inner circumferential coil body 12b disposed on inner circumferential coil body 12a (see Fig. 28).

First magnetic body 13 shown in Fig. 27 has such a structure that component members 13a, 13b having a bent shape and component members 13c, 13d extending substantially in straight are joined to each other at joint portions 51. Each of component members 13a to 13d is formed of a magnetic body, and can be made of any magnetic body material as with first magnetic body 13 of each of the above-described embodiments.

For example, by using a soft magnetic body such as ferrite for component members 13a, 13b having the bent shape, component members 13a, 13b having complicated shapes can be readily formed. Further, the material of each of component members 13a to 13d in first magnetic body 13 may be changed in consideration of utilization conditions or the like.

Further, the second magnetic body not shown in Fig. 27 has basically the same structure as that of first magnetic body 13 described above. In other words, the second magnetic body has such a structure that two component members having a bent shape (component member 14b of Fig. 28 and a component member having substantially the same structure as component member 14b) are joined, at joint portions, to component members 13c, 13d extending substantially in straight.

As shown in Fig. 28, at each of the bent portions of superconducting coil body 10, inner circumferential coil body 12b is disposed at a position further away from center axis 16 of superconducting coil body 10 relative to inner circumferential coil body 12a. Further, regarding outer circumferential coil bodies 11a, 11b, the other outer circumferential coil body 11b is disposed at a position further away from center axis 16 relative to one outer circumferential coil body 11a. Moreover, as understood from Fig. 3 and Fig. 28, each of the inner circumference side surfaces of inner circumferential coil bodies 12a, 12b (main surfaces of superconducting wire 15) in the straight portion of superconducting coil body 10 shown in Fig. 3 is inclined relative to center axis 16 in a direction opposite to the direction of inclination of the bent portion of the superconducting coil body shown in Fig. 28.

Superconducting coil body 10 thus configured also provides an effect similar to the effect provided by superconducting coil body 10 shown in Fig. 1 to Fig. 4. Further, at least one of first magnetic body 13 and the second magnetic body is formed by joining the plurality of component members 13a to 13d to one another as shown in Fig. 27, so that a material for each of the plurality of component members 13a to 13d can be appropriately selected in consideration of utilization conditions of superconducting coil body 10 or the like. This leads to an increased degree of freedom in design for properties of superconducting coil body 10. The material or manufacturing method for each of component members 13a to 13d can be appropriately selected in accordance with the shapes thereof or the like. Accordingly, superconducting coil body 10 can be readily manufactured.

### (Nineteenth Embodiment)

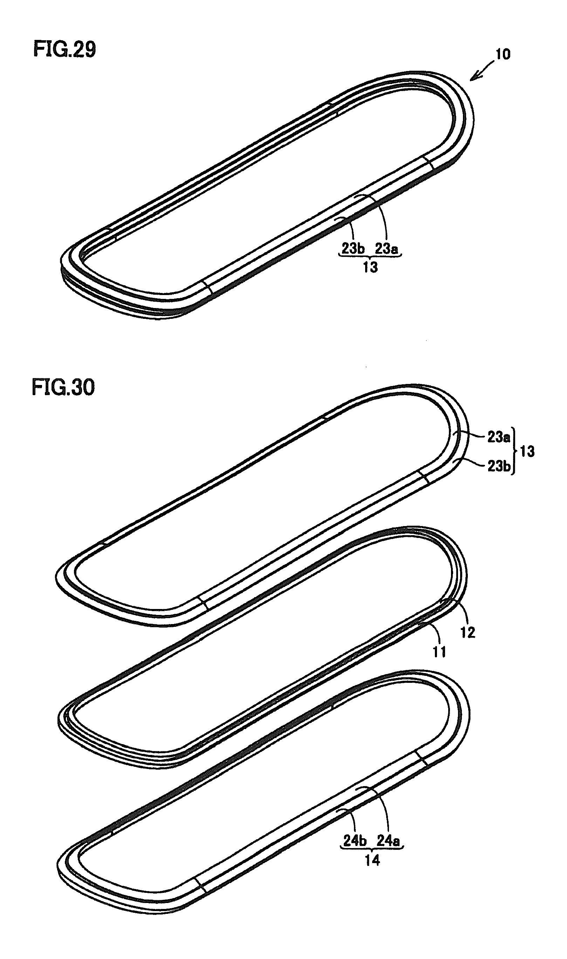

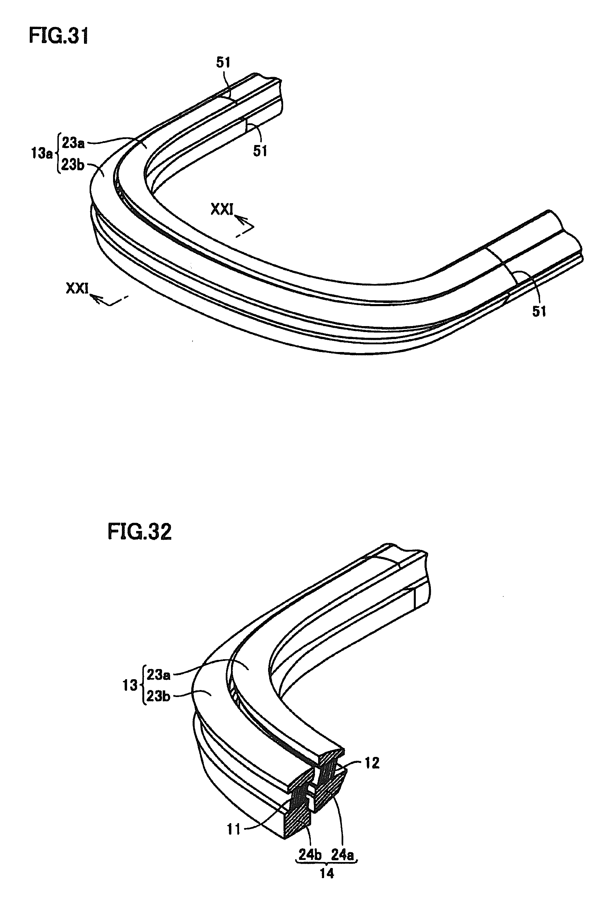

Referring to Fig. 29 to Fig. 32, the following describes a superconducting motor according to a nineteenth embodiment of the present invention. It should be noted that Fig. 31 is a partial enlarged schematic view showing a bent portion of superconducting coil body 10 shown in Fig. 29, and Fig. 32 is a schematic view showing a cross section of the bent portion of superconducting coil body 10 shown in Fig. 31.

The superconducting motor according to the nineteenth embodiment of the present invention has basically the same structure as that of the superconducting motor employing superconducting coil body 10 shown in Fig. 27 and Fig. 28, but is different therefrom in the structure of superconducting coil body 10. Specifically, as shown in Fig. 29 to Fig. 32, in the superconducting motor according to the nineteenth embodiment of the present invention, superconducting coil body 10 has a so-called saddle type shape, and first magnetic body 13 is formed of two, separated magnetic bodies 23a, 23b. Magnetic body 23a is connected to inner circumferential coil body 12. Magnetic body 23b is connected to outer circumferential coil body 11. A space is formed between magnetic body 23a and magnetic body 23b.

Likewise, the other magnetic body, i.e., second magnetic body 14 is also formed of two magnetic bodies 24a, 24b. Magnetic body 24a is connected to inner circumferential coil body 12. Magnetic body 24b is connected to outer circumferential coil body 11. A space is formed between magnetic body 24a and magnetic body 24b. This space has a sufficiently narrow width. For example, the width may be not less than 0.1 mm and not more than 5 mm as with superconducting coil body 10 shown in Fig. 5.

Magnetic bodies 23a, 23b, 24a, 24b described above are formed by joining a plurality of component members at joint portions 51 as with first magnetic body 13 of superconducting coil body 10 shown in Fig. 27. Further, each of outer circumferential coil body 11 and inner circumferential coil body 12 shown in Fig. 29 to Fig. 32 may be formed by forming a laminate of layers of a superconducting wire, or may be a laminate coil including a plurality of coil bodies which are disposed on each other and in each of which a superconducting wire is wound as in superconducting coil body 10 shown in Fig. 1 to Fig. 3.

The space between magnetic bodies 23a, 23b and the space between magnetic bodies 24a, 24b are sufficiently narrow, so that a magnetic circuit can be formed by first magnetic body 13 and second magnetic body 14. Hence, superconducting coil body 10 shown in Fig. 29 to Fig. 32 also provides an effect similar to the effect provided by superconducting coil body 10 shown in Fig. 27 and Fig. 28.

### (Twentieth Embodiment)

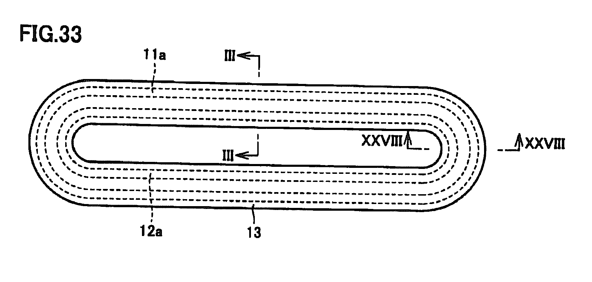

Referring to Fig. 33, the following describes a superconducting motor according to a twentieth embodiment of the present invention. It should be noted that Fig. 33 corresponds to Fig. 27.

The superconducting motor according to the twentieth embodiment of the present invention has basically the same structure as that of the superconducting motor employing superconducting coil body 10 shown in Fig. 27 and Fig. 28, but is different therefrom in the structure of superconducting coil body 10. Specifically, as shown in Fig. 33, in the superconducting motor according to the twentieth embodiment of the present invention, first magnetic body 13 of superconducting coil body 10 (and the second magnetic body not shown in the figure) is formed in one piece as one member, rather than the plurality of component members joined to one another.

Superconducting coil body 10 thus configured also provides an effect similar to the effect provided by superconducting coil body 10 shown in Fig. 1 to Fig. 4. Further, first magnetic body 13 thus configured as one member can suppress occurrence of a problem, such as local change in magnetic or electric property of first magnetic body 13 (for example, the property is locally changed at a portion having a structure different from its surroundings, such as the joint portion).

For first magnetic body 13 (or the second magnetic body), there can be used a sintered compact obtained by molding and thereafter sintering magnetic powders, for example. Alternatively, for first magnetic body 13 (or the second magnetic body), there can be used a composite obtained by mixing magnetic powders into a resin and molding and solidifying them (composite having the magnetic powders dispersed in the resin). In the case where a soft ferrite material is used as the material of the above-described first magnetic body or second magnetic body, it is desirable to use a material having a relatively high saturation magnetic flux density and attaining small loss during driving. Examples thereof include MB28D and ML33D provided by Hitachi Metals, Ltd., and the like. These materials may be sintered or may be mixed in a resin and then be molded.

Further, a laminate obtained by disposing and fixing a plurality of plate-like magnetic bodies (for example, magnetic steel sheets), each of which has been pressed into a predetermined shape, on each other can be used as first magnetic body 13 (or the second magnetic body). Further, the above-described sintered compact, composite, or laminate can be used as the material of first magnetic body 13 and second magnetic body 14 in each of the first to nineteenth embodiments of the present invention.

### (Twenty-First Embodiment)

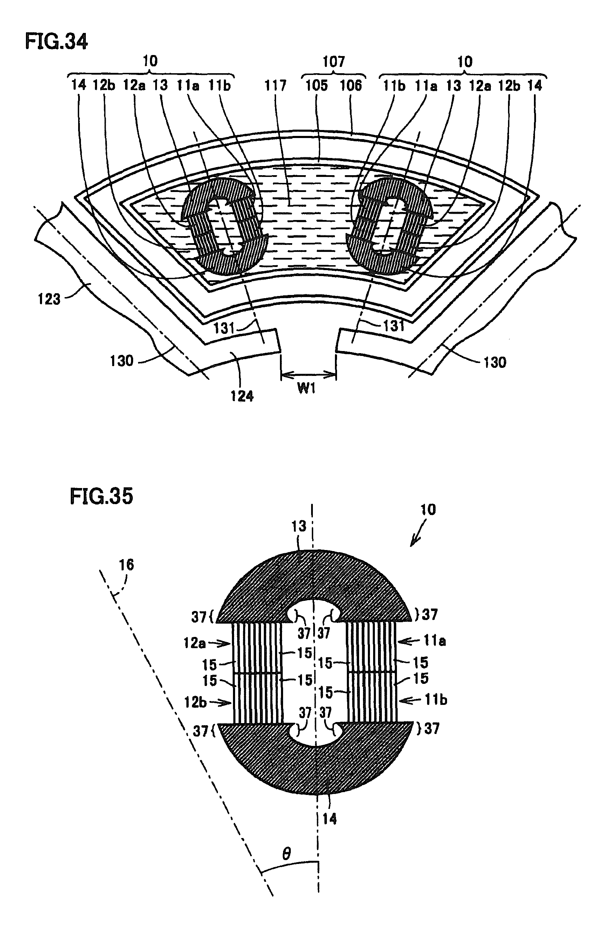

Referring to Fig. 1 and Fig. 34, a superconducting motor 100 according to the present embodiment includes basically the same structure as that of superconducting motor 100 according to the first embodiment of the present invention. Specifically, superconducting motor 100 according to the present embodiment includes a rotor and a stator disposed around the rotor.

Around the rotor, the stator is disposed as the stator of superconducting motor 100 as shown in Fig. 1. The stator includes: a stator yoke 121; stator cores 123 formed to project from the inner circumferential side of stator yoke 121 toward the rotor; superconducting coil bodies 10 disposed to surround the outer circumferences of stator cores 123; and cooling containers 107 having the superconducting coil bodies retained therein. In the superconducting motor according to the present embodiment, stator cores 123 are disposed at six locations at an equal interval, and superconducting coil bodies 10 are provided to surround stator cores 123. In other words, as a three-phase stator with six slots, six superconducting coil bodies 10 are disposed at an equal interval.

Stator yoke 121 is disposed to surround the outer circumference of rotor shaft 116. The cross sectional shape of the inner surface of stator yoke 121 (the cross sectional shape along a plane perpendicular to the direction of extension of rotation shaft 118) is an arc-like shape. Superconducting coil bodies 10 are disposed along the arc-like inner surface of stator yoke 121. Each of cooling containers 107 has an opening at a region positioned at the central portion of each superconducting coil body 10, so as to permit insertion of a portion of stator core 123 therein. In other words, superconducting coil bodies 10 are disposed to surround the outer circumference of stator core 123.

Cooling container 107 includes: a cooling container inner tub 105 having coolant 117 and superconducting coil bodies 10 retained therein; and a cooling container outer tub 106 disposed to surround the outer circumference of cooling container inner tub 105. A space is provided between cooling container outer tub 106 and cooling container inner tub 105. This space is substantially a vacuum. In other words, cooling container 107 is a heat insulation container.

As shown in Fig. 1 and Fig. 34, each of superconducting coil bodies 10 includes: inner circumferential coil bodies 12a, 12b surrounding the inner circumference of stator core 123; outer circumferential coil bodies 11a, 11b disposed to surround the outer circumferential sides of inner circumferential coil bodies 12a, 12b; a first magnetic body 13 disposed to connect the upper end surface of inner circumferential coil body 12a and the upper end surface of outer circumferential coil body 11a to each other; and a second magnetic body 14 disposed to connect the lower end surface of inner circumferential coil body 12b and the lower end surface of outer circumferential coil body 11b to each other. Inner circumferential coil bodies 12a, 12b and outer circumferential coil bodies 11a, 11b are formed by winding a superconducting wire 15 having a tape-like shape. By disposing inner circumferential coil bodies 12a, 12b, outer circumferential coil bodies 11a, 11b, first magnetic body 13, and second magnetic body 14 in this manner, first magnetic body 13 and second magnetic body 14 allows magnetic flux generated by a current flowing in superconducting wire 15 to extend in a direction parallel to the main surfaces of superconducting wire 15. As a result, the magnetic flux can be suppressed from passing through the main surfaces of superconducting wire 15. Inner circumferential coil bodies 12a, 12b and outer circumferential coil bodies 11a, 11b are formed to annularly surround a center axis 16 shown in Fig. 35. In other words, center axis 16 corresponds to the center axis of the winding of superconducting wire 15.

Inner circumferential coil bodies 12a, 12b are disposed on each other such that the end surface (end surface continuous to the main surface) of superconducting wire 15 of inner circumferential coil body 12a and the end surface of superconducting wire 15 of inner circumferential coil body 12b face each other. Likewise, outer circumferential coil bodies 11a, 11b are also disposed on each other such that the end surface (end surface continuous to the main surface) of superconducting wire 15 of inner circumferential coil body 11a and the end surface of superconducting wire 15 of inner circumferential coil body 11b face each other. It should be noted that the structure shown here is a structure in which the two coils, i.e., inner circumferential coil bodies 12a, 12b are disposed on each other, but only one inner circumferential coil body may be disposed or three or more inner circumferential coil bodies may be disposed on one another. Likewise, regarding outer circumferential coil bodies 11a, 11b, only one outer circumferential coil body may be disposed or three or more outer circumferential coil bodies may be disposed on one another.

Each of the main surfaces of superconducting wire 15 in each of inner circumferential coil bodies 12a, 12b and outer circumferential coil bodies 11a, 11b is formed to be inclined at an angle of not less than 10° relative to center axis 16. In other words, an angle (angle 8 in Fig. 35) formed by center axis 16 and the main surface of superconducting wire 15 is not less than 10°. Angle θ is preferably not less than 30°. More preferably, angle θ is not less than 30° and not more than 45°. When viewed from a different point of view, longitudinal axis 131 of superconducting coil body 10 in the cross section shown in Fig. 34 is formed to be inclined at angle θ relative to center axis 130 of the stator core.

Here, part of lines of magnetic flux resulting from current flowing in superconducting wire 15 normally travel relatively outwardly of superconducting coil body 10 relative to superconducting wire 15, and accordingly pass through the inside of stator yoke 121. However, part of the lines of magnetic flux become leakage magnetic flux, travel relatively inwardly as compared with the foregoing lines of magnetic flux, accordingly enter the inside of cooling container inner tub 105, and passes through the inside of superconducting wire 15. The leakage magnetic flux passing through superconducting wire 15 causes AC loss, which can lead to deterioration of current property of superconducting coil body 10 and decrease of electrical efficiency of the superconducting motor.

To address this, the main surface of superconducting wire 15 is inclined relative to center axis 16 at angle 8 described above, with the result that leakage magnetic flux from the side surface of stator core 123 to the superconducting coil body 10 side can be drawn to the magnetic circuit member (for example, second magnetic body 14) and can be permitted to travel around superconducting wire 15 or the leakage magnetic flux can be guided to flow toward an opening between the end portion of tip portion 124 of stator core 123 and the end portion of the tip portion of the other adjacent stator core. As a result, the leakage magnetic flux can be suppressed from passing through the main surface of superconducting wire 15.

Here, specifically, if angle θ is less than 10°, part of leakage magnetic flux particularly from the side surface of stator core 123 to the superconducting coil body 10 side pass through superconducting wire 15 of superconducting coil body 10. This results in AC loss. Further, the part of the leakage magnetic flux is drawn to second magnetic body 14 and is therefore changed in its direction of extension, with the result that the part of the leakage magnetic flux may accordingly reach the other superconducting coil body 10 provided adjacent thereto in the same cooling container inner tub. On the other hand, when the above-described angle is not less than 10°, the leakage magnetic flux having entered the cooling container inner tub passes through second magnetic body 14 and travels to the tip portion 124 side of stator core 123 (for example, opening between the end portion of the tip portion thereof and the end portion of the tip portion of the other adjacent stator core), thereby suppressing the leakage magnetic flux from passing through superconducting wire 15. In particular, when angle 8 is not less than 30° and not more than 45°, the leakage magnetic flux can be more effectively suppressed from passing through the main surface of superconducting wire 15, thereby reducing AC loss. It should be noted that if superconducting coil body 10 is formed in an actual superconducting motor with angle θ (angle of inclination) being set at not less than 45°, the size of the superconducting motor unfavorably becomes large due to structural restriction. In other words, angle 8 is preferably no more than 45°. It should be noted that the numerical range of angle θ may be applied to other embodiments described above.

In the superconducting motor shown in Fig. 35, the main surfaces of superconducting wires 15 of inner circumferential coil bodies 12a, 12b and outer circumferential coil bodies 11a, 11b are parallel to each other. In this way, magnetic flux density vectors resulting from currents flowing in respective superconducting wires 15 can be canceled by each other, thereby reducing magnetic flux passing through the main surfaces of superconducting wires 15. On the other hand, the main surfaces of superconducting wires 15 of inner circumferential coil bodies 12a, 12b and the main surfaces of superconducting wires 15 of outer circumferential coil bodies 11a, 11b may not be parallel to each other as long as an influence of the leakage magnetic flux over the superconducting wires can be tolerated. In this case, the main surfaces of superconducting wires 15 of inner circumferential coil bodies 12a, 12b and the main surfaces of superconducting wires 15 of outer circumferential coil bodies 11a, 11b preferably have an angle of inclination falling within the above-described range relative to the center axis of superconducting coil body 10.

As shown in Fig. 34 and Fig. 35, each of first magnetic body 13 and second magnetic body 14 can be provided with a bent cross sectional shape such as a sector shape. Further, when viewing superconducting coil body 10 in a plan view (when viewing superconducting coil body 10 in a direction along center axis 16), first magnetic body 13 and second magnetic body 14 may be provided with such a shape (annular shape) that surrounds stator core 123. Further, as shown in Fig. 4, outer circumferential coil body 11b and second magnetic body 14 can be connected and fixed to each other by bonding agent 29 such as an adhesive agent. Such a bonding agent 29 can be also used for connection and fixation of outer circumferential coil body 11a, inner circumferential coil bodies 12a, 12b, second magnetic body 14, and first magnetic body 13. The material of each of first magnetic body 13 and second magnetic body 14 may be any material as long as it is a magnetic body material. Different magnetic body materials may be employed therefor, respectively.

As shown in Fig. 34 and Fig. 35, in superconducting coil body 10 included in superconducting motor 100 of the present invention, a magnetic circuit is formed by inner circumferential coil bodies 12a, 12b, outer circumferential coil bodies 11a, 11b, first magnetic body 13, and second magnetic body 14. Further, as shown in Fig. 4, the end surface of second magnetic body 14 facing outer circumferential coil body 11b has end portions projecting outwardly of the surface of outer circumferential coil body 11b facing second magnetic body 14. As shown in Fig. 35, projecting portions 19 including the end portions projecting in this manner are formed in regions of first magnetic body 13 and second magnetic body 14 facing inner circumferential coil bodies 12a, 12b and outer circumferential coil bodies 11a, 11b.

Accordingly, lines of magnetic flux, in particular, around boundary portions among inner circumferential coil bodies 12a, 12b, outer circumferential coil bodies 11a, 11b, first magnetic body 13, and second magnetic body 14 can be drawn into first magnetic body 13 and second magnetic body 14 via projecting portions 19. In other words, generation of lines of magnetic flux passing through main surfaces 15a, 15b of superconducting wire 15 can be suppressed at the boundary portions. This can suppress the problem of large loss in superconducting coil body 10 due to the generation of lines of magnetic flux passing through main surfaces 15a, 15b of superconducting wire 15 and resultant deterioration of performance of superconducting coil body 10.

It should be noted that as shown in Fig. 34 and Fig. 35, surface portions 37 inclined relative to the direction of extension of main surfaces 15a, 15b of superconducting wire 15 are formed at the end portions of side surfaces 14a (see Fig. 4) of first magnetic body 13 and second magnetic body 14 that are continuous to respective end surfaces thereof facing inner circumferential coil bodies 12a, 12b and outer circumferential coil bodies 11a, 11b. Each of surface portions 37 may be a flat surface or may have a curved shape as shown in Fig. 35 and the like.

### (Twenty-Second Embodiment)

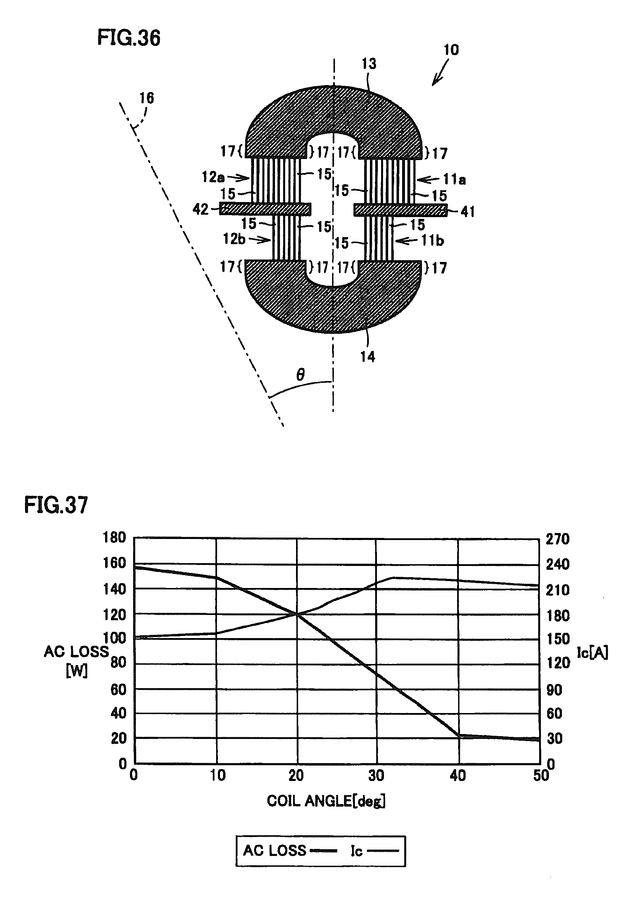

Referring to Fig. 21 and Fig. 36, the following describes a superconducting motor according to a twenty-second embodiment of the present invention. The superconducting motor according to the twenty-second embodiment has basically the same structure as that of the superconducting motor shown in Fig. 1, Fig. 34, and Fig. 35 and provides a similar effect, but is different therefrom only in the structure of the superconducting coil body.

Specifically, an intermediate magnetic circuit member 42 is disposed between inner circumferential coil bodies 12a and 12b included in superconducting coil body 10. Intermediate magnetic circuit member 42 has an annular plan shape as with those of inner circumferential coil bodies 12a, 12b, and has a width (width in the leftward/rightward direction in Fig. 36) larger than the thickness of each of inner circumferential coil bodies 12a, 12b. Intermediate magnetic circuit member 42 can be made of any material as long as it is a magnetic body, but it is preferable to employ the same material as the material of first magnetic body 13 or second magnetic body 14.

Inner circumferential coil body 12a and inner circumferential coil body 12b may be different in thickness in the radial direction when viewed from the center axis of the coil. Specifically, the thickness of inner circumferential coil body 12b may be smaller than the thickness of inner circumferential coil body 12a. A step portion is formed at a connection portion between inner circumferential coil bodies 12a, 12b.

On this occasion, inner circumferential coil bodies 12a, 12b are different from each other in number of turns of superconducting wire 15, so that magnetic flux density vectors resulting from currents flowing in inner circumferential coil bodies 12a, 12b are not canceled by each other. This results in a large ratio of the lines of magnetic flux passing through the main surfaces of superconducting wire 15. As a result, large loss takes place at this step portion.

To address this, in the present embodiment, intermediate magnetic circuit member 42 is disposed between inner circumferential coil bodies 12a, 12b, whereby the direction of lines of magnetic flux resulting from current flowing in one of inner circumferential coil body 12a and inner circumferential coil body 12b can be prevented from directly influencing the other inner circumferential coil body. Accordingly, even though inner circumferential coil bodies 12a, 12b having different numbers of turns are disposed on each other, the ratio of the lines of magnetic flux passing through the main surfaces of superconducting wire 15 of each of inner circumferential coil bodies 12a, 12b can be suppressed from being increased.

Because the thickness of inner circumferential coil body 12b disposed in a position closer to center axis 130 of the stator core is made smaller than the thickness of inner circumferential coil body 12a disposed at a position relatively away from center axis 130, inner circumferential coil body 12b can be disposed at a position away from center axis 130 of the stator core as far as possible. In this way, leakage magnetic flux is less likely to pass through the main surface of inner circumferential coil body 12b.

Further, in the example shown in Fig. 36, superconducting coil body 10 also has an intermediate magnetic circuit member 41 between outer circumferential coil body 11a and outer circumferential coil body 11b. Intermediate magnetic circuit member 41 has an annular plan shape as with those of outer circumferential coil bodies 11a, 11b, and has a width (width in the leftward/rightward direction in Fig. 36) larger than the thickness of each of outer circumferential coil bodies 11a, 11b. Intermediate magnetic circuit member 41 can be made of any material as long as it is a magnetic body, but it is preferable to employ the same material as the material of first magnetic body 13 or second magnetic body 14 as with intermediate magnetic circuit member 42.

Further, intermediate magnetic circuit member 41 provided between outer circumferential coil bodies 11a, 11b provides effective reduction of the direct influence of the direction of the lines of magnetic flux, which result from current flowing in one of outer circumferential coil body 11a and outer circumferential coil body 11b, over the other inner circumferential coil body as with the case where intermediate magnetic circuit member 42 is disposed between inner circumferential coil bodies 12a, 12b. In other words, even when the thickness of outer circumferential coil body 11b is made smaller than the thickness of outer circumferential coil body 11a, the ratio of the lines of magnetic flux passing through the main surfaces of superconducting wire 15 of each of outer circumferential coil bodies 11a, 11b can be suppressed from being increased.

Further, in superconducting motor 100 of the present invention including superconducting coil body 10 shown in Fig. 36, superconducting wire 15 is wound to be inclined at an angle θ (angle of inclination) of not less than 10° relative to center axis 16 of superconducting coil body 10. Accordingly, as with the superconducting motors shown in Fig. 1, Fig. 34, Fig. 35, and the like, loss can be suppressed in superconducting coil body 10, thereby achieving high efficiency.

The following describes characteristic configurations of the present invention, although a part of them have been already described in the foregoing embodiments.

A superconducting coil body 10 according to the present invention includes: a coil main body portion (inner circumferential coil bodies 12a, 12b; coil bodies 21a, 21b) in which a superconducting wire 15 is wound; and a magnetic circuit member (first magnetic body 13; magnetic body 23). The magnetic circuit member (first magnetic body 13, magnetic body 23) is formed of a magnetic body and is disposed to face a surface (surface facing first magnetic body 13 or magnetic body 23, such as an upper surface of inner circumferential coil body 12a) of the coil main body portion (inner circumferential coil bodies 12a, 12b; coil bodies 21a, 21b), the surface being positioned at an end surface side thereof crossing a main surface of superconducting wire 15. The magnetic circuit member (first magnetic body 13; magnetic body 23) is used to form a magnetic circuit for permitting magnetic flux, which is generated by a current flowing in the coil main body portion, to travel around the current.

Further, a superconducting coil body 10 according to the present invention includes: a coil main body portion (inner circumferential coil bodies 12a, 12b; coil bodies 21a, 21b) in which a superconducting wire 15 is wound; and a magnetic circuit member (first magnetic body 13; magnetic body 23). The magnetic circuit member (first magnetic body 13; magnetic body 23) is formed of a magnetic body and is disposed to face a surface (surface facing first magnetic body 13 or magnetic body 23, such as an upper surface of inner circumferential coil body 12a) of the coil main body portion (inner circumferential coil bodies 12a, 12b; coil bodies 21a, 21b), the surface being positioned at an end surface side thereof crossing a main surface of superconducting wire 15. The magnetic circuit member (first magnetic body 13; magnetic body 23) includes a facing surface that faces the surface of the coil main body portion (inner circumferential coil bodies 12a, 12b; coil bodies 21a, 21b). In the magnetic circuit member (first magnetic body 13; magnetic body 23), the facing surface has an end portion that forms a projecting portion 19 projecting outwardly of the surface (the surface facing first magnetic body 13 or magnetic body 23) of the coil main body portion (inner circumferential coil bodies 12a, 12b; coil bodies 21a, 21b).

In this way, lines of magnetic flux generated around superconducting coil body 10 can be guided to be drawn to the end portion (projecting portion 19 projecting outwardly of the coil main body portion) of the facing surface of the magnetic circuit member. Accordingly, the lines of magnetic flux are less likely to pass through main surfaces 15a, 15b of superconducting wire 15. In other words, the magnetic circuit member (first magnetic body 13; magnetic body 23), which is formed of the magnetic body, is disposed at the end surface side crossing main surfaces 15a, 15b of superconducting wire 15, so that superconducting coil body 10 is configured to permit the lines of magnetic flux to travel around the center of the current flowing in the coil main body portion (inner circumferential coil bodies 12a, 12b; coil bodies 21a, 21b). As a result, the lines of magnetic flux can be guided to the direction along the main surface of superconducting wire 15. This can suppress occurrence of loss resulting from the lines of magnetic flux passing through main surfaces 15a, 15b of superconducting wire 15 in superconducting coil body 10.

In superconducting coil body 10 described above, the magnetic circuit member (first magnetic body 13; magnetic body 23) includes a side surface continuous to the facing surface and extending in a direction crossing the facing surface. As shown in Fig. 1 to Fig. 7, this side surface may have an inclination portion (surface portion 37) that is positioned at an end portion thereof close to the coil main body portion (inner circumferential coil bodies 12a, 12b; coil bodies 21a, 21b) and that is inclined relative to a direction of extension of the main surface of superconducting wire 15. In the inclination portion, the magnetic circuit member (first magnetic body 13; magnetic body 23) may have a width becoming larger as it is closer to the coil main body portion (inner circumferential coil bodies 12a, 12b; coil bodies 21a, 21b). In this case, the lines of magnetic flux can be more effectively drawn to projecting portion 19 including surface portion 37.

In superconducting coil body 10 described above, the magnetic circuit member (first magnetic body 13; magnetic body 23) includes a side surface continuous to the facing surface and extending in a direction crossing the facing surface. As shown in Fig. 8 to Fig. 15, this side surface may have an flat surface portion 17 that is positioned at an end portion thereof close to the coil main body portion (inner circumferential coil bodies 12a, 12b; coil bodies 21a, 21b) and that extends in a direction of extension of the main surface of superconducting wire 15. In this case, in a region where the coil main body portion and the magnetic circuit member face each other, the direction of lines of magnetic flux from first magnetic body 13 and magnetic body 23 toward inner circumferential coil bodies 12a, 12b or coil bodies 21a, 21b can be efficiently defined to be a direction along main surfaces 15a, 15b of superconducting wire 15 as shown in Fig. 11.

Further, a superconducting coil body 10 according to the present invention includes: a coil main body portion (inner circumferential coil bodies 12a, 12b; coil bodies 21a, 21b) in which a superconducting wire 15 is wound; and a magnetic circuit member (first magnetic body 13; magnetic body 23). The magnetic circuit member (first magnetic body 13; magnetic body 23) is formed of a magnetic body and is disposed to face a surface (surface facing first magnetic body 13 or magnetic body 23, such as an upper surface of inner circumferential coil body 12a) of the coil main body portion (inner circumferential coil bodies 12a, 12b; coil bodies 21a, 21b), the surface being positioned at an end surface side thereof crossing a main surface of superconducting wire 15. The magnetic circuit member (first magnetic body 13; magnetic body 23) includes: a facing surface that faces the surface of the coil main body portion (inner circumferential coil bodies 12a, 12b; coil bodies 21a, 21b); and a side surface continuous to the facing surface and extending in a direction crossing the facing surface. The side surface has a flat surface portion 17 that is positioned at an end portion thereof close to the coil main body portion (inner circumferential coil bodies 12a, 12b; coil bodies 21a, 21b) and that extends in a direction of extension of the main surface of superconducting wire 15.

In this case, the coil main body portion (inner circumferential coil bodies 12a, 12b; coil bodies 21a, 21b) and the magnetic circuit member (first magnetic body 13; magnetic body 23) forms a portion of the magnetic circuit, and the side surface of the magnetic circuit member such as first magnetic body 13 or magnetic body 23 has flat surface portion 17 close to the coil main body portion. Hence, in the region where the coil main body portion and the magnetic circuit member face each other, the direction of lines of magnetic flux from first magnetic body 13 and magnetic body 23 toward inner circumferential coil bodies 12a, 12b or coil bodies 21a, 21b can be efficiently defined to be a direction along main surfaces 15a, 15b of superconducting wire 15 as shown in Fig. 11. This can effectively reduce a ratio of the lines of magnetic flux extending to pass through the main surface of superconducting wire 15 in the coil main body portion. This can suppress occurrence of loss resulting from the lines of magnetic flux passing through main surfaces 15a, 15b of superconducting wire 15 in superconducting coil body 10. It should be noted that the length of flat surface portion 17 (length in the direction of extension of the lines of magnetic flux) can be, for example, not less than 10% and not more than 100% of the width of superconducting wire 15.

In the magnetic circuit member (first magnetic body 13; magnetic body 23) of superconducting coil body 10, as shown in Fig. 10, Fig. 11, Fig. 13 to Fig. 15, and the like, the facing surface may have an end portion (end portion of a surface facing inner circumferential coil bodies 12a, 12b or coil bodies 21a, 21b) serving as a projecting portion 19 projecting outwardly of the surface of the coil main body portion. The projection height of projecting portion 19 from the surface of each of inner circumferential coil bodies 12a, 12b may be, for example, not less than 0.1 mm. In this case, lines of magnetic flux generated around superconducting coil body 10 can be guided to be drawn to the end portion (projecting portion 19 projecting outwardly of the coil main body portion) of the facing surface of the magnetic circuit member. Accordingly, the lines of magnetic flux are less likely to pass through main surfaces 15a, 15b of superconducting wire 15. It should be noted that the projection height of projecting portion 19 (for example, the height of projecting portion 19 in a direction perpendicular to the surface of inner circumferential coil body 12a) is preferably made as large as possible. Hence, for example, projecting portion 19 may be made as high as a height at which it makes contact with the inner wall of the cooling container having superconducting coil body 10 contained therein.

In superconducting coil body 10 described above, the magnetic circuit member (first magnetic body 13) may include a plurality of magnetic body members (magnetic bodies 23a, 23b) separated from each other with a space 28 interposed therebetween as shown in Fig. 5 and Fig. 13. It should be noted that when space 28 is sufficiently small, a degree of leakage of the lines of magnetic flux from space 28 is very small. Hence, a magnetic circuit can be formed by the magnetic circuit member (first magnetic body 13) and the coil main body portion (inner circumferential coil bodies 12a, 12b). Further, space 28 is disposed at a position away from superconducting coil body 10. Accordingly, the absolute value of the density of magnetic flux passing through superconducting coil body 10 and first magnetic body 13 can be made small without influencing the direction of the lines of magnetic flux in the vicinity of superconducting coil body 10. Namely, an effect of reducing loss is provided.

In superconducting coil body 10 described above, the coil main body portion (inner circumferential coil bodies 12a, 12b; coil bodies 21a, 21b) includes an other surface (lower surface of inner circumferential coil body 12b; lower surface of coil body 21b) positioned opposite to the surface (upper surface of inner circumferential coil body 12a; upper surface of coil body 21a). Superconducting coil body 10 may include an other magnetic circuit member (second magnetic body 14) formed of a magnetic body and disposed to face the other surface of the coil main body portion.

In this case, the coil main body portion is sandwiched between first magnetic body 13 and second magnetic body 14, whereby the magnetic circuit can be more securely formed by these members.

In superconducting coil body 10 described above, the other magnetic circuit member (second magnetic body 14) includes an other facing surface that faces the other surface (lower surface of inner circumferential coil body 12b; lower surface of coil body 21b) of the coil main body portion (inner circumferential coil bodies 12a, 12b; coil bodies 21a, 21b). In the other magnetic circuit member (second magnetic body 14), the other facing surface may have an end portion projecting outwardly of the other surface (lower surface of inner circumferential coil body 12b; lower surface of coil body 21b) of the coil main body portion (inner circumferential coil bodies 12a, 12b; coil bodies 21a, 21b). In this case, in the region where the lower surface of inner circumferential coil body 12b or the lower surface of coil body 21b faces second magnetic body 14, the lines of magnetic flux can be guided to be drawn into the end portion (projecting portion 19 of second magnetic body 14 projecting outwardly of the coil main body portion) of the other facing surface. Accordingly, the lines of magnetic flux are less likely to pass through main surfaces 15a, 15b of superconducting wire 15.

In superconducting coil body 10 described above, the other magnetic circuit member (second magnetic body 14) includes an other side surface 14a continuous to the other facing surface and extending in a direction crossing the other facing surface. The other side surface 14a may have an inclination portion (surface portion 37) that is positioned at an end portion thereof close to the coil main body portion (inner circumferential coil bodies 12a, 12b; coil bodies 21a, 21b) and that is inclined relative to a direction of extension of the main surface of superconducting wire 15. In this case, the lines of magnetic flux can be more effectively drawn to projecting portion 19 including surface portion 37.

In superconducting coil body 10 described above, the other magnetic circuit member (second magnetic body 14) includes an other side surface 14a continuous to the other facing surface and extending in a direction crossing the other facing surface. The other side surface 14a may have a flat surface portion 17 that is positioned at an end portion thereof close to the coil main body portion (inner circumferential coil bodies 12a, 12b; coil bodies 21a, 21b) and that extends in a direction of extension of the main surface of superconducting wire 15. In this case, in the region where the coil main body portion and second magnetic body 14 face each other, the direction of lines of magnetic flux from second magnetic body 14 toward inner circumferential coil bodies 12a, 12b or coil bodies 21a, 21b can be efficiently defined to be a direction along main surfaces 15a, 15b of superconducting wire 15 as shown in Fig. 11.

In superconducting coil body 10 described above, the other magnetic circuit member (second magnetic body 14) may include a plurality of magnetic body members (magnetic bodies 24a, 24b) separated from each other with a space 28 interposed therebetween as shown in Fig. 5 and Fig. 13.

In superconducting coil body 10 described above, as shown in Fig. 7 and Fig. 15, the magnetic circuit member and the other magnetic circuit member may be connected to each other to be in one piece (the magnetic circuit member and the other magnetic circuit member may be configured as magnetic body 23). In this case, the magnetic circuit can be securely formed by the coil main body portion (coil bodies 21a, 21b) and magnetic body 23 in which the magnetic circuit member and the other magnetic circuit member are in one piece. Accordingly, the lines of magnetic flux passing through the main surface of superconducting wire 15 are less likely to be generated in the coil main body portion (coil bodies 21a, 21b).

In superconducting coil body 10 described above, as shown in Fig. 16 to Fig. 25, the coil main body portion (inner circumferential coil bodies 12a, 12b; coil bodies 21a, 21b) may include: a first coil (inner circumferential coil body 12a; coil body 21a) in which superconducting wire 15 is wound; and a second coil (inner circumferential coil body 12b; coil body 21b) which is disposed on the first coil (inner circumferential coil body 12a; coil body 21a) and in which superconducting wire 15 is wound. Further, superconducting coil body 10 may further include an intermediate magnetic circuit member 42 disposed between the first coil (inner circumferential coil body 12a; coil body 21a) and the second coil (inner circumferential coil body 12b; coil body 21b). In this case, even when the first coil (inner circumferential coil body 12a; coil body 21a) and the second coil (inner circumferential coil body 12b; coil body 21b) have different numbers of turns, a direction of lines of magnetic flux resulting from a current flowing in one of the first coil and the second coil can be prevented from directly influencing the other coil.

As shown in Fig. 1 to Fig. 6, Fig. 8 to Fig. 11, Fig. 13, and Fig. 15, superconducting coil body 10 may further include an outer circumferential side coil main body portion (outer circumferential coil bodies 11a, 11b) which is disposed to surround an outer circumference of the coil main body portion and in which superconducting wire 15 is wound. The outer circumferential side coil main body portion (outer circumferential coil bodies 11a, 11b) includes a surface (upper surface of outer circumferential coil body 11a) positioned at an end surface side thereof crossing the main surface of superconducting wire 15, and an other surface (lower surface of outer circumferential coil body 11b) opposite to the surface. The magnetic circuit member (first magnetic body 13) may include an outer circumferential side facing surface that faces the surface (upper surface of outer circumferential coil body 11a) of the outer circumferential side coil main body portion (outer circumferential coil bodies 11a, 11b). In the magnetic circuit member (first magnetic body 13), the outer circumferential side facing surface may have an end portion projecting outwardly of the surface of the outer circumferential side coil main body portion (outer circumferential coil bodies 11a, 11b) (in a direction of extension of the outer circumferential side facing surface). The other magnetic circuit member (second magnetic body 14) may include an other outer circumferential side facing surface that faces the other surface of the outer circumferential side coil main body portion (outer circumferential coil bodies 11a, 11b). In the other magnetic circuit member (second magnetic body 14), the other outer circumferential side facing surface may have an end portion projecting outwardly of the other surface (lower surface of outer circumferential coil body 11b) of the outer circumferential side coil main body portion (outer circumferential coil bodies 11a, 11b).

Further, as shown in Fig. 8 to Fig. 14, superconducting coil body 10 may further include an outer circumferential side coil main body portion (outer circumferential coil bodies 11a, 11b) which is disposed to surround an outer circumference of the coil main body portion and in which the superconducting wire is wound. The outer circumferential side coil main body portion (outer circumferential coil bodies 11a, 11b) may include a surface (upper surface of outer circumferential coil body 11a) positioned at an end surface side thereof crossing the main surface of superconducting wire 15, and an other surface (lower surface of outer circumferential coil body 11b) opposite to the surface. The magnetic circuit member (first magnetic body 13) may include: an outer circumferential side facing surface that faces the surface (upper surface of outer circumferential coil body 11a) of the outer circumferential side coil main body portion; and an outer circumferential side surface (side surface of a portion of first magnetic body 13 facing outer circumferential coil body 11a) continuous to the outer circumferential side facing surface and extending in a direction crossing the outer circumferential side facing surface. In the magnetic circuit member (first magnetic body 13; magnetic body 23), the outer circumferential side surface may have a flat surface portion 17 that is positioned at an end portion thereof close to the outer circumferential side coil main body portion (outer circumferential coil bodies 11a, 11b) and that extends in a direction of extension of main surfaces 15a, 15b of superconducting wire 15 of the outer circumferential side coil main body portion. The other magnetic circuit member (second magnetic body 14) may include an other outer circumferential side facing surface that faces an other surface (lower surface of outer circumferential coil body 11b) of the outer circumferential side coil main body portion (outer circumferential coil bodies 11a, 11b); and an other outer circumferential side surface continuous to the other outer circumferential side facing surface and extending in a direction crossing the other outer circumferential side facing surface. As shown in Fig. 11, in the other magnetic circuit member (second magnetic body 14), the other outer circumferential side surface may have a flat surface portion 17 that is positioned at an end portion thereof close to the outer circumferential side coil main body portion (outer circumferential coil bodies 11a, 11b) and that extends in a direction of extension of main surfaces 15a, 15b of superconducting wire 15 of the outer circumferential side coil main body portion.

In this case, the coil main body portion (inner circumferential coil bodies 12a, 12b) and the outer circumferential side coil main body portion (outer circumferential coil bodies 11a, 11b) are disposed concentrically with respect to center axis 16. Moreover, the magnetic circuit member (first magnetic body 13) and the other magnetic circuit member (second magnetic body 14) are disposed so as to provide connection between the coil main body portion and the outer circumferential side coil main body portion. Hence, the magnetic circuit can be formed by the coil main body portion (inner circumferential coil bodies 12a, 12b), the magnetic circuit member (first magnetic body 13), the outer circumferential side coil main body portion (outer circumferential coil bodies 11a, 11b), and the other magnetic circuit member (second magnetic body 14). As a result, lines of magnetic flux passing through main surfaces 15a, 15b of superconducting wire 15 of each of the coil main body portion and the outer circumferential side coil main body portion can be more securely suppressed from being generated, thereby suppressing occurrence of loss resulting from the lines of magnetic flux.

Further, in superconducting coil body 10 described above, as shown in Fig. 16 to Fig. 19 and Fig. 21 to Fig. 24, the outer circumferential side coil main body portion (outer circumferential coil bodies 11a, 11b) may include: a first outer circumferential side coil (outer circumferential coil body 11a) in which superconducting wire 15 is wound; and a second outer circumferential side coil (outer circumferential coil body 11b) which is disposed on the first outer circumferential side coil (outer circumferential coil body 11a) and in which superconducting wire 15 is wound. Superconducting coil body 10 may further include an outer circumferential side intermediate magnetic circuit member (intermediate magnetic circuit member 41) disposed between the first outer circumferential side coil (outer circumferential coil body 11a) and the second outer circumferential side coil (outer circumferential coil body 11b). In this case, even when the first outer circumferential side coil (outer circumferential coil body 11a) and the second outer circumferential side coil (outer circumferential coil body 11b) have different numbers of turns, a direction of lines of magnetic flux resulting from a current flowing in one of the first outer circumferential side coil and the second outer circumferential side coil can be prevented from directly influencing the other coil.

In superconducting coil body 10 described above, each of the magnetic circuit member (first magnetic body 13; magnetic body 23), the other magnetic circuit member (second magnetic body 14), and intermediate magnetic circuit members 41, 42 may be a laminate having a plurality of plate-like magnetic bodies (for example, magnetic steel sheets) disposed on each other. In this case, first magnetic body 13, magnetic body 23, second magnetic body 14, and intermediate magnetic circuit members 41, 42 can be formed by, for example, processing magnetic steel sheets. Accordingly, manufacturing cost of superconducting coil body 10 can be reduced as compared with a case where heat treatment for sintering or the like is performed to manufacture first magnetic body 13 and the like.

In superconducting coil body 10 described above, each of the magnetic circuit member (first magnetic body 13; magnetic body 23), the other magnetic circuit member (second magnetic body 14), and intermediate magnetic circuit members 41, 42 may be a sintered compact of a magnetic body material. In this case, the magnetic body material is molded in advance into a predetermined shape before sintering. In this way, first magnetic body 13, magnetic body 23, second magnetic body 14, and intermediate magnetic circuit members 41, 42 having any shapes can be obtained. This leads to an increased degree of freedom in design of the shapes of first magnetic body 13, magnetic body 23, second magnetic body 14, and intermediate magnetic circuit members 41, 42.

In superconducting coil body 10 described above, each of the magnetic circuit member (first magnetic body 13; magnetic body 23), the other magnetic circuit member (second magnetic body 14), and intermediate magnetic circuit members 41, 42 may be a composite of a magnetic body material and a resin. In this case, the magnetic body material (for example, powders of the magnetic body material) is contained in the resin and then they are solidified (for example, molded) into an appropriate shape, thereby readily obtaining first magnetic body 13 or the like having the magnetic body material dispersed in the resin.

In superconducting coil body 10 described above, as shown in Fig. 27 to Fig. 32, each of the magnetic circuit member (first magnetic body 13; magnetic body 23), the other magnetic circuit member (second magnetic body 14), and intermediate magnetic circuit members 41, 42 may be a joint body having a plurality of component members (for example, a plurality of component members 13a to 13d shown in Fig. 27) joined to each other. In this case, for first magnetic body 13 and the like, the plurality of component members are formed first, and then are joined to each other, thereby forming first magnetic body 13. Accordingly, even when first magnetic body 13 and the like have complicated shapes, they can be manufactured as component members 13a to 13d based on readily formable portions thereof as units. In this way, first magnetic body 13 and the like having complicated shapes can be readily formed.

Further, in consideration of utilization conditions of superconducting coil body 10, materials or manufacturing methods can be changed among component members 13a to 13d. This leads to improvement of property of a superconducting device including superconducting coil body 10.

A superconducting motor 100 serving as a superconducting device according to the present invention includes superconducting coil body 10 described above. In this case, highly efficient superconducting motor 100 can be obtained in which loss is suppressed in superconducting coil body 10.

In superconducting motor 100 serving as the superconducting device, an angle θ of not less than 10° may be formed by the center axis of superconducting coil body 10 and the main surface of superconducting wire 15. In other words, the superconducting device according to the present invention is superconducting motor 100 serving as a superconducting device including superconducting coil body 10, and superconducting coil body 10 includes: a coil main body portion in which a superconducting wire 15 is wound; and a magnetic circuit member (first magnetic body 13 and second magnetic body 14) formed of a magnetic body and disposed to face a surface of the coil main body portion, the surface being positioned at an end surface side thereof crossing a main surface of superconducting wire 15, an angle 0 of not less than 10° being formed by the center axis of superconducting coil body 10 and the main surface of superconducting wire 15.

In this case, the coil main body portion and the magnetic circuit member (first magnetic body 13 and second magnetic body 14) form a portion of the magnetic circuit. Further, as shown in Fig. 36 and the like, the side surface of the magnetic circuit member (first magnetic body 13 and second magnetic body 14) has a flat surface portion close to the coil main body portion. Hence, in the region where the surface of the coil main body portion and the facing surface of the magnetic circuit member face each other, a direction of lines of magnetic flux from the magnetic circuit member (first magnetic body 13 and second magnetic body 14) to the coil main body portion can be efficiently defined to be a direction along the main surface of superconducting wire 15 of the coil main body portion. In other words, the magnetic circuit member (first magnetic body 13 and second magnetic body 14), which is formed of the magnetic body, is disposed at the end surface side crossing the main surface of superconducting wire 15 of the coil main body portion. Accordingly, the coil main body portion and the magnetic circuit member (first magnetic body 13 and second magnetic body 14) are disposed such that magnetic flux can travel around the center of the current flowing in the coil main body portion. As a result, the direction of magnetic flux generated by the current flowing in the coil main body portion can be guided to the direction along the main surface of superconducting wire 15 as described above. This can effectively reduce a ratio of the lines of magnetic flux extending to pass through the main surface of superconducting wire 15 in the coil main body portion. This can suppress occurrence of loss resulting from the lines of magnetic flux passing through the main surface of superconducting wire 15 in the superconducting coil.

Further, with angle θ being not less than 10°, occurrence of AC loss can be effectively suppressed in the superconducting coil body and a critical current value can be also improved.

Angle θ formed by the center axis of the superconducting coil body and the main surface of superconducting wire 15 is preferably not less than 30°, more preferably, not more than 45°. Here, angle θ of not less than 30° is determined as a preferable range because angle θ of not less than 30° provides a sufficiently large critical current value and provides a reduction effect of AC loss more securely. Further, the upper limit of angle θ is 45° because the following problem becomes noticeable. That is, angle θ of more than 45° makes it difficult to wind superconducting wire 15 to form the superconducting coil body, and makes the size (occupation area) of the superconducting coil body too large, thereby resulting in a small degree of freedom in design of the superconducting device.

The coil main body portion may have a first coil (inner circumferential coil body 12a) in which superconducting wire 15 is wound, and a second coil (inner circumferential coil body 12b) which is disposed on the first coil and in which superconducting wire 15 is wound. Superconducting coil body 10 may further include an intermediate magnetic circuit member 42 disposed between the first coil and the second coil. Intermediate magnetic circuit member 42 may be formed of a magnetic body.

In this case, even when the first coil (inner circumferential coil body 12a) and the second coil (inner circumferential coil body 12b) have different numbers of turns, a direction of lines of magnetic flux resulting from a current flowing in one of the first coil and the second coil can be prevented from directly influencing the other coil.

The superconducting coil body may further include an outer circumferential side coil main body portion (outer circumferential coil bodies 11a, 11b) which is disposed to surround an outer circumference of the coil main body portion and in which superconducting wire 15 is wound. The outer circumferential side coil main body portion may have a surface positioned at an end surface thereof crossing the main surface of superconducting wire 15. The magnetic circuit member (first magnetic body 13 and second magnetic body 14) may include an outer circumferential side facing surface that faces the surface of the outer circumferential side coil main body portion. Angle θ of not less than 10° may be formed by the center axis of the superconducting coil body and the main surface of superconducting wire 15 of the outer circumferential side coil main body portion.

In this case, the coil main body portion (inner circumferential coil bodies 12a, 12b) and the outer circumferential side coil main body portion (outer circumferential coil bodies 11a, 11b) are concentrically disposed with respect to center axis 16, and the magnetic circuit member (first magnetic body 13) is disposed to connect the coil main body portion and the outer circumferential side coil main body portion to each other. Accordingly, the magnetic circuit can be formed by the coil main body portion (inner circumferential coil bodies 12a, 12b), the magnetic circuit member (first magnetic body 13), the outer circumferential side coil main body portion (outer circumferential coil bodies 11a, 11b), and the other magnetic circuit member (second magnetic body 14) shown in Fig. 36. As a result, lines of magnetic flux passing through the main surface of superconducting wire 15 of each of the coil main body portion and the outer circumferential side coil main body portion can be more securely suppressed from being generated, thereby suppressing occurrence of loss resulting from the lines of magnetic flux.

Further, angle θ of not less than 10° is formed by center axis 16 of the superconducting coil body and the main surface of superconducting wire 15 of the outer circumferential side coil main body portion (outer circumferential coil bodies 11a, 11b), thereby effectively suppressing occurrence of AC loss in the outer circumferential side coil main body portion and improving a critical current value. The above-described angle θ is not less than 10° because the reduction effect of the AC loss in the superconducting coil body according to the present invention is more noticeable when angle θ is the range of not less than 10°.

Angle θ formed by the center axis of the superconducting coil body and the main surface of superconducting wire 15 of the outer circumferential side coil main body portion (outer circumferential coil bodies 11a, 11b) is preferably not less than 30°, more preferably, not more than 45°. Here, angle θ of not less than 30° is determined as a preferable range because angle θ of not less than 30° provides a sufficiently large critical current value in the outer circumferential side coil main body portion and provides the reduction effect of AC loss more securely. Further, the upper limit of angle θ is 45° because the following problem becomes noticeable. That is, angle θ of more than 45° makes it difficult to wind superconducting wire 15 to form the outer circumferential side coil main body, and makes the size (occupation area) of the superconducting coil body too large, thereby resulting in a small degree of freedom in design of the superconducting device.

### (Example 1)

In order to confirm the effect of the present invention, the following simulation was conducted. Specifically, for superconducting coil bodies having three types of configurations, loss (so-called "AC loss") was calculated by means of simulation so as to empirically find configurations exhibiting minimum values of AC loss. Then, these minimum values of AC loss were compared.

### (Examined Object)

Superconducting Coil Body of Example:

The configuration of superconducting coil body 10 shown in Fig. 10 was employed. Specifically, the number of turns (number of winding) of each of inner circumferential coil bodies 12a, 12b and outer circumferential coil bodies 11a, 11b was set at 14. Superconducting wire 15 of each of these coil bodies was set to have the following size: a width of 4.65 mm; a thickness of 0.31 mm; an electric resistance of 1 × 10⁻⁵Ω for the entire coil length.

Further, the sizes of first magnetic body 13 and second magnetic body 14 were set as follows: the widths of their surfaces facing outer circumferential coil bodies 11a, 11b and inner circumferential coil bodies 12a, 12b shown in Fig. 10 were 6.34 mm. For the magnetic properties of first magnetic body 13 and second magnetic body 14, a library for physical properties of magnetic steel sheet was used. The library was included in software used for the simulation.

Superconducting Coil Body of Comparative Example 1:

No magnetic body was used. A superconducting coil was divided into two stages. In each of the stages, an angle of the main surface of the superconducting wire relative to the center axis of the coil was changed such that it is along the direction of lines of magnetic flux as much as possible. It should be noted that the superconducting wire used was a superconducting wire on the same condition as that of the superconducting wire of the superconducting coil body of the above-described example. The total number of turns in the stages was the same as that in the superconducting coil body of the above-described example.

Superconducting Coil Body of Comparative Example 2:

A superconducting wire on the same condition as that of the superconducting coil body of the above-described example was used to arrange outer circumferential coil bodies 11a, 11b and inner circumferential coil bodies 12a, 12b such that outer circumferential coil bodies 11a, 11b and inner circumferential coil bodies 12a, 12b have annular cross sectional shapes. This was done to attain the following: the lines of magnetic flux formed by these coil bodies are brought into a nearly circular arrangement when viewed in the cross section shown in Fig. 10; and the direction of extension of the lines of magnetic flux becomes in parallel with the main surface of the superconducting wire of each of the coil bodies as much as possible. Plate-like magnetic bodies were disposed to surround outer circumferential coil bodies 11a, 11b and inner circumferential coil bodies 12a, 12b in four directions. These magnetic bodies were provided to draw lines of magnetic flux from outside and prevent entrance of the lines of magnetic flux from outside into the coil bodies.

### (Examination Method)

For each of the systems of the above-described example as well as comparative examples 1 and 2, the arrangement or size of the magnetic bodies and the arrangement of each of the coil bodies were appropriately changed so as to determine the value of AC loss by means of simulation. It should be noted that common conditions used in the simulation were as follows: a current value per wire was 172 A (peak value); and a motor rotation speed was 735 rpm. The software used in the simulation was JMAG.

### (Result)

As a result of the simulation, in the system of the example of the present invention, the minimum value of AC loss was 179 W. On the other hand, the minimum value of AC loss was 446 W in the system of comparative example 1 and the minimum value of AC loss was 238 W in the system of comparative example 2. Thus, it was indicated that the system of the example of the present invention is capable of reducing AC loss the most.

### (Example 2)

In order to confirm the effect of the present invention, the following simulation was conducted. Specifically, for superconducting coil bodies having two types of configurations, loss (so-called "AC loss") was calculated by means of simulation so as to empirically find configurations exhibiting minimum values of AC loss. Then, these minimum values of AC loss were compared.

### (Examined Object)

Superconducting Coil Body of Example 1:

The configuration of superconducting coil body 10 shown in Fig. 22 was employed. Specifically, the number of turns of inner circumferential coil body 12a was set at 13, and the number of turns of each of inner circumferential coil body 12b and outer circumferential coil bodies 11a, 11b was set at 9. Superconducting wire 15 of each of these coil bodies had the following size: a width of 4.65 mm; a thickness of 0.31 mm; and an electric resistance of 1 × 10⁻⁵Ω for the entire coil length.

Further, the sizes of first magnetic body 13 and second magnetic body 14 were set in the same manner as the superconducting coil body of the example of example 1, i.e., as follows: the widths of their surfaces facing outer circumferential coil bodies 11a, 11b or inner circumferential coil bodies 12a, 12b shown in Fig. 22 were 6.34 mm. For the magnetic properties of first magnetic body 13 and second magnetic body 14, a library for physical properties of magnetic steel sheet was used. The library was included in software used for the simulation.

Further, each of the widths of the upper and lower surfaces of intermediate magnetic circuit members 41, 42 was 6.34 mm. Further, each of intermediate magnetic circuit members 41, 42 had a thickness of 1 mm. For the magnetic properties of intermediate magnetic circuit members 41, 42, the library for physical properties of magnetic steel sheet was used. The library was included in software used for the simulation.

Superconducting Coil Body of Example 2:

There was employed a configuration having the same elements as those of example 1 except that intermediate magnetic circuit members 41, 42 were removed from the superconducting coil body of example 1. It should be noted that the superconducting wire used was a superconducting wire on the same condition as that of the superconducting wire of the superconducting coil body of example 1. The total number of turns in the stages was the same as that in the superconducting coil body of example 1.

### (Examination Method)

For each of the systems of examples 1 and 2 described above, the value of AC loss was determined by means of simulation while appropriately changing the arrangement or size of the magnetic bodies and the arrangement of each of the coil bodies. It should be noted that common conditions used in the simulation were as follows: a current value per wire was 159 A (peak value); and a motor rotation speed was 1470 rpm. The software used in the simulation was JMAG.

### (Result)

As a result of the simulation, in the system of example 1 of the present invention, the minimum value of AC loss was 78 W. On the other hand, in the system of example 2, the minimum value of AC loss was 96 W. Thus, it was indicated that by disposing intermediate magnetic circuit members 41, 42 as in the system of example 1 of the present invention, the AC loss can be reduced in the superconducting coil body having coils disposed on each other and having different numbers of turns.

### (Example 3)

In order to confirm the effect of the present invention, the following simulation was conducted. Specifically, simulation was conducted to evaluate a relation between the AC loss and the angle of inclination of the main surface of superconducting wire 15 relative to center axis 130 of stator core 123 in the superconducting motor according to the twenty-first embodiment.

### (Evaluated Object)

The superconducting motor of the twenty-first embodiment as shown in Fig. 1 and Fig. 34 was employed. Specifically, the number of turns (number of winding) of each of inner circumferential coil bodies 12a, 12b and outer circumferential coil bodies 11a, 11b was set at 14. Superconducting wire 15 of each of these coil bodies was set to have the following size: a width of 4.65 mm; a thickness of 0.31 mm; an electric resistance of 1 × 10⁻⁵Ω for the entire coil length. Further, the opening formed between tip portions 124 of adjacent stator cores 123 shown in Fig. 34 had a width (slot opening width) of 10 mm.

Further, the sizes of first magnetic body 13 and second magnetic body 14 were set as follows: the widths of their surfaces facing outer circumferential coil bodies 11a, 11b and inner circumferential coil bodies 12a, 12b shown in Fig. 35 were 6.34 mm. For the magnetic properties of first magnetic body 13 and second magnetic body 14, a library for physical properties of magnetic steel sheet was used. The library was included in software used for the simulation.

### (Examination Method)

For the above-described example, AC loss and critical current value were determined by means of simulation while appropriately changing the angle of inclination of the main surface of the superconducting wire relative to the center axis of the stator core. It should be noted that conditions used in the simulation were as follows: a current value per wire was 159 A (peak value); and a motor rotation speed was 735 rpm. The software used in the simulation was JMAG.

### (Result)

Referring to Fig. 37, as a result of the simulation, it was confirmed that when the angle of inclination was not less than 10°, the AC loss was reduced and critical current value Ic was increased. It should be noted that the horizontal axis of Fig. 37 represents a coil angle (angle θ shown in Fig. 35 or angle of inclination; the unit thereof is "deg."). The vertical axis on the left side represents the AC loss (the unit thereof is "W"). The vertical axis on the right side represents critical current value Ic (the unit thereof was "A").

Referring to Fig. 37, the critical current value tended to be increased until the angle of inclination was increased up to 30°. When the angle of inclination fell within a range of 30° to 50°, no noticeable correlation was found between the critical current value and the angle of inclination. On the other hand, it was found that the AC loss tended to be noticeably decreased when the angle of inclination was increased from 10° to 40°. Meanwhile, the tendency of decrease of AC loss when the angle of inclination was not less than 40° was less noticeable than the tendency of decrease thereof when the angle of inclination fell within the range of not less than 10° and not more than 40°. It should be noted that due to structural restriction, it is not preferable to form the superconducting coil body with the angle of inclination being set at not less than 45° in an actual superconducting motor.

Thus, it was indicated that the AC loss in the superconducting motor can be reduced and the critical current value can be increased when the main surface of the superconducting wire is inclined relative to the center axis of the stator core (i.e., the center axis of superconducting coil body 10) at an angle of inclination of not less than 10°, preferably, not less than 30° and not more than 45°.

### (Example 4)

From example 1, it was found that reduction of AC loss in the superconducting motor and improvement of critical current value can be attained by optimizing the angle of inclination of the main surface of the superconducting wire of the superconducting coil body. However, depending on the shape of the stator around the superconducting coil body, a manner of generation of leakage magnetic flux may be changed to change the optimum value of the angle of inclination. In view of this, attention is directed to the opening that is defined by tip portions 124 (see Fig. 34) connected to the stator core and that is positioned at the inner circumferential side in the stator core relative to the cooling container having the superconducting coil body contained therein. In other words, in the present example, simulation was conducted to evaluate an influence of the size of the opening (slot opening width) over the AC loss and critical current value.

### (Evaluated Object)

The same configuration as that of the superconducting motor according to the first embodiment was evaluated. Analysis was performed under the following three conditions for the size of the opening (slot opening): 10 mm; 27 mm; and 44mm.

### (Examination Method)

The simulation was performed in the same manner as in example 1 described above.

### (Result)

As a result of the simulation, even though the slot opening width was changed as described above, the values of AC loss and critical current value were almost unchanged. In other words, it was indicated that the slot opening width has substantially no influence over the AC loss and critical current value.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

### INDUSTRIAL APPLICABILITY

The present invention is particularly advantageously applied to a superconducting device employing a superconducting coil, such as a superconducting motor.

### REFERENCE SIGNS LIST

10: superconducting coil body; 11, 11a, 11b: outer circumferential coil body; 12, 12a, 12b: inner circumferential coil body; 13: first magnetic body; 13a to 13d, 14b: component member; 14: second magnetic body; 14a: side surface; 15: superconducting wire; 15a, 15b: main surface; 16, 130: center axis; 17: flat surface portion; 19: projecting portion; 21a, 21b: coil body; 23, 23a, 23b, 24a, 24b: magnetic body; 28: space; 29: bonding agent; 37: surface portion; 51: joint portion; 41, 42: intermediate magnetic circuit member; 100: superconducting motor; 105: cooling container inner tub; 106: cooling container outer tub; 107: cooling container; 116: rotor shaft; 117: coolant; 118: rotation shaft; 120: permanent magnet; 121: stator yoke; 123: stator core; 131: longitudinal direction axis; 140, 141: direction axis.

## Claims

1. A superconducting coil body comprising:
a coil main body portion (12a, 12b) in which a superconducting wire (15) is wound; and
a magnetic circuit member (13) formed of a magnetic body and disposed to face a surface of said coil main body portion (12a, 12b), said surface being positioned at an end surface side thereof crossing a main surface of said superconducting wire (15), said magnetic circuit member (13) being used to form a magnetic circuit for permitting magnetic flux, which is generated by a current flowing in said coil main body portion (12a, 12b), to travel around said current.

2. The superconducting coil body according to claim 1, wherein
said magnetic circuit member (13) includes a facing surface that faces said surface of said coil main body portion (12a, 12b), and
in said magnetic circuit member (13), said facing surface has an end portion projecting outwardly of said surface of said coil main body portion.

3. The superconducting coil body according to claim 2, wherein
said magnetic circuit member (13) includes a side surface continuous to said facing surface and extending in a direction crossing said facing surface, and
said side surface has an inclination portion that is positioned at an end portion thereof close to said coil main body portion (12a, 12b) and that is inclined relative to a direction of extension of said main surface of said superconducting wire (15).

4. The superconducting coil body according to claim 2, wherein
said magnetic circuit member (13) includes a side surface continuous to said facing surface and extending in a direction crossing said facing surface, and
said side surface has a flat surface portion (17) that is positioned at an end portion thereof close to said coil main body portion (12a, 12b) and that extends in a direction of extension of said main surface of said superconducting wire (15).

5. The superconducting coil body according to any one of claims 1 to 4, wherein said magnetic circuit member (13) includes a plurality of magnetic body members (23a, 23b) separated from each other with a space interposed therebetween.

6. The superconducting coil body according to any one of claims 1 to 5, wherein said coil main body portion (12a, 12b) includes an other surface positioned opposite to said surface,
the superconducting coil body comprising an other magnetic circuit member (14) formed of a magnetic body and disposed to face said other surface of said coil main body portion (12a, 12b).

7. The superconducting coil body according to claim 6, wherein
said other magnetic circuit member (14) includes an other facing surface that faces said other surface of said coil main body portion (12a, 12b), and
in said other magnetic circuit member (14), said other facing surface has an end portion projecting outwardly of said other surface of said coil main body portion (12a, 12b).

8. The superconducting coil body according to claim 7, wherein
said other magnetic circuit member (14) includes an other side surface continuous to said other facing surface and extending in a direction crossing said other facing surface, and
said other side surface has an inclination portion that is positioned at an end portion thereof close to said coil main body portion (12a, 12b) and that is inclined relative to a direction of extension of said main surface of said superconducting wire (15).

9. The superconducting coil body according to claim 7, wherein
said other magnetic circuit member (14) includes an other side surface continuous to said other facing surface and extending in a direction crossing said other facing surface, and
said other side surface has a flat surface portion that is positioned at an end portion thereof close to said coil main body portion (12a, 12b) and that extends in a direction of extension of said main surface of said superconducting wire (15).

10. The superconducting coil body according to any one of claims 6 to 9, wherein said other magnetic circuit member (14) includes a plurality of magnetic body members (24a, 24b) separated from each other with a space interposed therebetween.

11. The superconducting coil body according to any one of claims 6 to 9, wherein said magnetic circuit member (13) and said other magnetic circuit member (14) are connected to each other to be in one piece.

12. The superconducting coil body according to any one of claims 6 to 11, wherein said other magnetic circuit member (14) is a laminate having a plurality of plate-like magnetic bodies disposed on each other.

13. The superconducting coil body according to any one of claims 6 to 11, wherein said other magnetic circuit member (14) is a sintered compact of a magnetic body material.

14. The superconducting coil body according to any one of claims 6 to 11, wherein said other magnetic circuit member (14) is a composite of a magnetic body material and a resin.

15. The superconducting coil body according to any one of claims 6 to 14, wherein said other magnetic circuit member (14) is a joint body having a plurality of component members joined to each other.

16. The superconducting coil body according to any one of claims 1 to 15, wherein
said coil main body portion (12a, 12b) includes
a first coil (12a) in which said superconducting wire (15) is wound, and
a second coil (12b) which is disposed on said first coil (12a) and in which said superconducting wire (15) is wound,
the superconducting coil body further comprising an intermediate magnetic circuit member (42) disposed between said first coil (12a) and said second coil (12b).

17. The superconducting coil body according to any one of claims 6 to 15, further comprising an outer circumferential side coil main body portion (11a, 11b) which is disposed to surround an outer circumference of said coil main body portion (12a, 12b) and in which the superconducting wire (15) is wound, wherein
said outer circumferential side coil main body portion (11a, 11b) includes a surface positioned at an end surface side thereof crossing the main surface of said superconducting wire (15), and an other surface positioned opposite to said surface,
said magnetic circuit member (13) includes an outer circumferential side facing surface that faces said surface of said outer circumferential side coil main body portion (11a, 11b),
in said magnetic circuit member (13), said outer circumferential side facing surface has an end portion projecting outwardly of said surface of said outer circumferential side coil main body portion (11a, 11b),
said other magnetic circuit member (14) includes an other outer circumferential side facing surface that faces said other surface of said outer circumferential side coil main body portion (11a, 11b), and
in said other magnetic circuit member (14), said other outer circumferential side facing surface has an end portion projecting outwardly of said other surface of said outer circumferential side coil main body portion (11a, 11b).

18. The superconducting coil body according to claim 17, wherein
said outer circumferential side coil main body portion (11a, 11b) includes
a first outer circumferential side coil (11a) in which said superconducting wire (15) is wound, and
a second outer circumferential side coil (11b) which is disposed on said first outer circumferential side coil (11a) and in which said superconducting wire (15) is wound,
the superconducting coil body further comprising an outer circumferential side intermediate magnetic circuit member (41) disposed between said first outer circumferential side coil (11a) and said second outer circumferential side coil (11b).

19. The superconducting coil body according to any one of claims 1 to 18, wherein said magnetic circuit member (13) is a laminate having a plurality of plate-like magnetic bodies disposed on each other.

20. The superconducting coil body according to any one of claims 1 to 18, wherein said magnetic circuit member (13) is a sintered compact of a magnetic body material.

21. The superconducting coil body according to any one of claims 1 to 18, wherein said magnetic circuit member (13) is a composite of a magnetic body material and a resin.

22. The superconducting coil body according to any one of claims 1 to 21, wherein said magnetic circuit member (13) is a joint body having a plurality of component members joined to each other.

23. A superconducting device comprising the superconducting coil body (10) recited in any one of claims 1 to 22.

24. The superconducting device according to claim 23, wherein an angle of not less than 10° is formed by a center axis of the superconducting coil body (10) and the main surface of said superconducting wire (15).

25. The superconducting device according to claim 24, wherein said angle is not less than 30°.

26. The superconducting device according to claim 24 or 25, wherein said angle is not more than 45°.

27. A superconducting device comprising the superconducting coil body (10) recited in any one of claims 1 to 16,
an angle of not less than 10° being formed by a center axis of the superconducting coil body (10) and the main surface of said superconducting wire (15),
the superconducting coil body (10) further including an outer circumferential side coil main body portion (11a, 11b) which is disposed to surround an outer circumference of said coil main body portion (12a, 12b) and in which the superconducting wire is wound,
said outer circumferential side coil main body portion (11a, 11b) having a surface positioned at an end surface side thereof crossing the main surface of said superconducting wire (15),
said magnetic circuit member (13) including an outer circumferential side facing surface of said outer circumferential side coil main body portion (11a, 11b), said outer circumferential side facing surface facing said surface,
an angle of not less than 10° being formed by the center axis of the superconducting coil body (10) and the main surface of said superconducting wire (15) of said outer circumferential side coil main body portion (11a, 11b).
